# EUROPEAN PATENT SPECIFICATION

(11) **EP 3 174 380 B1**
(45) Date of publication and mention of the grant of the patent: **12.12.2018**
(21) Application number: 15736062.9
(22) Date of filing: 26.06.2015
(51) Int. Cl.: A01F 15/08, B30B 9/30, F16F 9/53

(54) **BALE FORMING APPARATUS AND METHOD WITH A RETAINING DEVICE**
BALLENFORMUNGSVORRICHTUNG UND -VERFAHREN MIT EINER RÜCKHALTEEINRICHTUNG
APPAREIL ET PROCÉDÉ DE FORMATION DE BALLE À L'AIDE D'UN DISPOSITIF DE RETENUE

(30) Priority: 31.07.2014 NL 2013286
(43) Date of publication of application: 07.06.2017
(73) Proprietor: Forage Company B.V., 3147 PB Maassluis (NL)
(72) Inventor: KEUNE, Tobias, 3147 PB Maassluis (NL)
(74) Representative: AGCO Intellectual Property Department
(86) International application number: PCT/NL2015/050471
(87) International publication number: WO 2016/018142

(56) References cited:
- EP-A1- 2 481 276
- US-A- 5 367 865
- US-A- 5 819 643
- US-A1- 2007 176 035
- US-A1- 2010 116 606
- US-B1- 7 481 160

## Description

### FIELD OF THE INVENTION

The invention refers to a bale forming apparatus and to a bale forming method for forming a bale from loose material, in particular from loose agricultural crop material.

Two basic kinds of bale forming apparatuses (balers) are known:
round balers forming round-cylindrical bales in a drum-shaped bale forming chamber and
cuboid balers (square balers) forming cuboid bales in a pressing channel with a rectangular cross-sectional area.

A round baler forms a round-cylindrical bale in a drum-shaped bale forming chamber. The bale forming chamber is surrounded by a pressing means, e.g. by at least one endless flexible pressing belt and/or by several pressing rollers. In order to make the baler having a bale forming chamber with variable size or to control the achieved density of the generated bale, a deflecting roller for the pressing belt or for at least one bale pressing roller or further pressing member is mounted on a pivotal lever member. As further crop material is injected into the bale forming chamber, the bale and therefore the bale forming chamber tends to expand. The expanding round-cylindrical bale in the bale forming chamber applies an expanding force onto the pressing belt or the pressing member(s). This expanding force is transferred onto the pivotal lever member. The pivotal lever member is pivoted by the expanding bale against the retaining force of a retaining device, e.g. of two hydraulic retaining cylinders and/or of helical springs. The result of using the retaining device is: The higher the applied retaining force is the higher the pressure onto the bale and therefore the density of the created bale will be. The density may vary over the bale's diameter in a desired manner, e.g. a bale with a soft core and a dense torus around the soft core. In order to control the density of the bale, a control unit controls the applied retaining force.

A cuboid baler forms under pressure a string of compressed loose material in the pressing channel and moves the string towards a channel outlet. In general a piston oscillates in a front segment of the pressing channel. Often a part in a rear segment of at least one sidewall of the pressing channel is pivotally mounted. The expanding force of the loose material pivots the pivotal sidewall part against the retaining force of a retaining device, thereby enlarging the rear segment. In one embodiment an actuator applies a pressing force onto the pivotal sidewall part against the expanding force of the loose material in the pressing channel. A control unit controls the retaining force to be surpassed and/or the pressing force applied by this actuator. Again the density may vary in a desired manner.

The invention can be used in a round baler with a pivotal lever member for a pressing belt or pressing roller or for a further pivotal bale forming member as well as in a cuboid baler with a pivotal sidewall part or further pivotal bale forming member. The invention refers in particular to the retaining device connected with this pivotal lever member for a bale pressing member.

### BACKGROUND OF THE INVENTION

Several mechanisms for controlling the retaining force in a bale forming apparatus were proposed.

In US 5,367,865 a round baler 10 is described. The drum-shaped bale forming chamber is defined by rollers 21, 22, 23 and by side-by-side belts 32. The rollers 21, 22, 23 are mounted between two arms 24 which are pivotally mounted on stub shafts 26. The belts 32 are guided around guide rollers 33 to 37 mounted in the tailgate 14 and around a drive roll 38 mounted on the mainframe. Several further guide rolls 40, 43, 44 ensure sufficient tension of the belts 32 and are mounted between two belt tension lever arms 41. The lever arms 41 are pivotally connected with two further lever arms 45 by means of a cross shaft 42. The lever arms 41 are pivoted against the tensioning force of the pressing belts 32 by two different means: by two springs 50 connected with the lever arms 41 and by two hydraulic cylinders 46 connected with the lever arms 45. A piston 52 mounted on a rod 53 moves the cylinder 46. A hose 51 supplies fluid to the cylinder 46. The hydraulic fluid can flow from the rod end of the cylinder 46 to the base end via an adjustable relief valve 54. By means of a control handle 60 an operator can set the relief pressure of the valve 54 and can thereby define a desired tension on the belts (the apron 32). A gauge 58 measures the pressure of the hydraulic fluid in the hose 51.

The agricultural round baling press of EP 0875136 B1 also creates a round bale by means of several pressing belts (Riemen 14) guided over deflecting rollers (Umlenkwalzen 16). For ensuring sufficient tension three rollers 16 are mounted on the free ends of two tensioning arms (Schwenkarme 18). Two hydraulic cylinders 20 with piston rods (Kolbenstangen 22) pivot the tensioning arms 18. The growing bale presses fluid out of the cylinders 20 into a line or hose (Leitung 62). A pressure limiting valve (Druckbegrenzungsventil 64) guides fluid into an outlet line (Ablaufleitung 66) as long as the actual pressure exceeds the threshold defined by the valve 64. A control unit (Steuer- und Regelvorrichtung 68) monitors the valve 64. The control unit 68 processes signals indicative of the pressure in the line 62 and amends the threshold in the valve 64. The control unit 68 further processes signals from an unbalancing sensor (Unwuchtsensor 78) and controls the valve 64 for eliminating such an unbalancing (Unwucht) in the rotating bale.

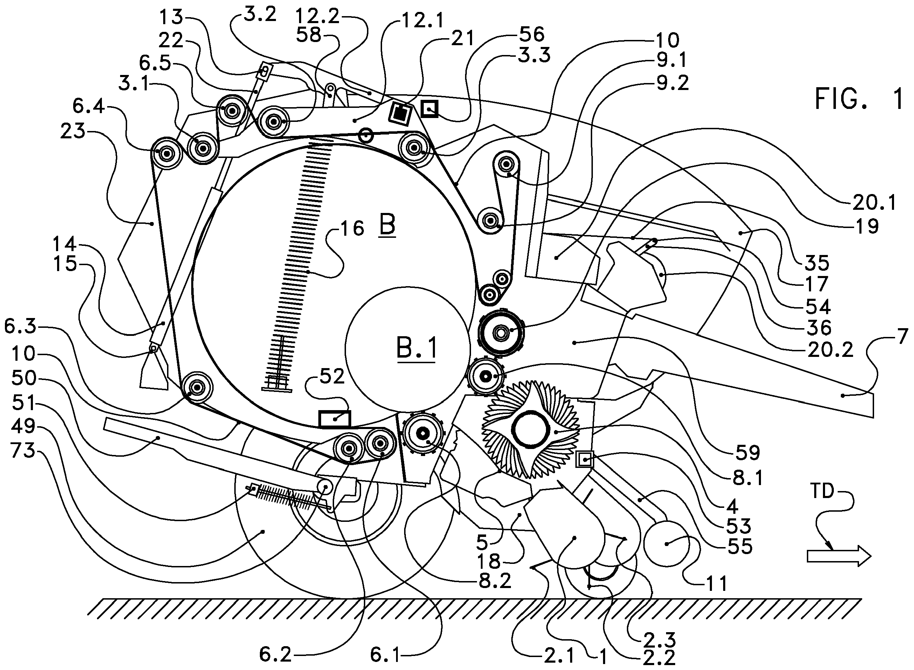

US 5,819,643 describes a square baler (cuboid baler) for crop material. The square baler comprises a bale forming chamber with four sidewalls. A reciprocating (oscillating) plunger presses crop material through the bale forming chamber (pressing channel) rearwards towards the outlet such that a rectangular package of crop material is formed. The rectangular package of crop material is pressed in a bale case 10 with four sidewalls and a rectangular opening between these four sidewalls. A square bale is first pressed through the forward portion 13 and afterwards pressed through the rearward portion 14, i.e. in Fig. 1 from right to left. The rearward portion 14 comprises two consecutive segments: a first segment extending from the end of the forwards portion to the frame assembly 15 and a second segment extending from the frame assembly to the frame member at the end of the bale case.

Eight pivotal rails 30, 31 (at the upper wall), 32, 33 (at the lower wall), and 34, 35 (at the two sidewalls) define and limit the cross section of the rearward portion 14 of the cuboid baler of US 5,819,643. All eight rails are pivotally mounted and are pivotally secured at their forwards ends to the forward portion 13. Two single-acting hydraulic cylinders 46, 47 are mounted between the upper and lower transverse sections 16, 17 via pivot members 48, 50 and 51, 52. When the piston rods of these cylinders 46, 47 are retracted, the opposing side rails 34, 35 move inwardly, the top rails 30, 31 move downwardly, and the lower rails 32, 34 move upwardly. By these steps the dimension of the cross section of the rearward portion 14 is reduced.

### SUMMARY OF THE INVENTION

A problem solved by the invention is to provide a bale forming apparatus with the features of the preamble of claim 1 and a bale forming method with the features of the preamble of claim 13 wherein the retaining device does not require a valve which is to be actuated while the bale forming apparatus forms a bale than known balers.

This problem is solved by a bale forming apparatus with the features of claim 1 and a bale forming method with the features of claim 13. Preferred embodiments are specified in the depending claims.

The invention refers to a bale forming apparatus and to a bale forming method for forming a bale from loose material. A pivotal bale forming member contributes to form or otherwise process the bale. A retaining device yields or is arranged to yield a retaining force, comprises a hydraulic system and a flow restricting device and controls or is arranged to control the pivoting of the pivotal bale forming member. The hydraulic system contains or is arranged to contain a hydraulic fluid. The flow restricting device restricts or is arranged to restrict a flow of the hydraulic fluid in the interior of the hydraulic system. The flow restricting device comprises a field generator. This field generator generates or is arranged to generate a magnetic field in a part of the hydraulic system.

The bale forming apparatus operates as follows: The hydraulic system is filled with a magneto-rheological fluid. The rheology of a magneto-rheological fluid is affected by the strength of a magnetic field to which the fluid is exposed. The magnetic field generated by the field generator applies a magnetic force onto this fluid. Changing the generated magnetic field changes the viscosity of the magneto-rheological fluid in the hydraulic system. Changing the viscosity changes the retaining force yielded by the retaining device. The pivotal movement of the bale forming member is performed against this changeable retaining force. Thereby this pivotal movement is controlled.

### ADVANTAGES

The retaining device according to the invention controls the pivoting of the pivotal bale forming member by restricting the flow of a hydraulic fluid through the hydraulic system in a controlled manner. This restriction of the fluid flow is yielded by the fluid viscosity which is changed by switching on or off the magnetic field or by changing the field strength.

The field generator does not necessarily comprise a moveable part at all. No part of the field generator comes in contact with the hydraulic fluid. Therefore the field generator is not subjected to mechanical wear or to wear due to the flow of hydraulic fluid. The flow restricting device with the field generator can be implemented without a mechanical part which moves during operation. The only moveable parts of the retaining device are the hydraulic fluid in the system and a moveable hydraulic system part being connected with the pivotal bale forming member, preferably a piston in the interior of a hydraulic cylinder belonging to the hydraulic system and a connecting member which mechanically connects the piston with the pivotal bale forming member.

In particular the flow restricting device according to the invention does not require a valve for a fluid line of the hydraulic system wherein the valve has to be actuated for changing the yielded retaining force. In addition it does not require an actuator or a mechanical transmission element. It does not require an electric or hydraulic line or a mechanic transmission element for moving such a valve. In addition no monitoring unit for monitoring the operation of such a valve or of such a valve actuator is required. Therefore the flow restricting device according to the invention has a longer lifetime and a higher reliability than known retaining mechanisms of baling forming apparatuses. Less service and repair operations need to be performed.

Thanks to the invention the resulting flow restriction and thereby the provided retaining force can be controlled and changed purely by changing the strength of the generated magnetic field. Increasing/decreasing the field strength increases/decreases the viscosity and thereby the rheology of the hydraulic fluid in the hydraulic system part and thereby the retaining force to be surpassed. Changing the field strength can be achieved very quickly as no mechanical part has to be moved. It suffices to provide an electric coil or spool through which an electric current flows. Only the electric current running through the coil or spool has to be switched on or off or the amperage of this electric current has to be changed. In general only a part of a second is required for achieving a new state (other field strength). A control unit can trigger the viscosity change in a fully automated manner and needs not to trigger a mechanical actuator. For changing the viscosity and thereby for changing the provided retaining force only electronic control inputs for the field generator are needed but no mechanical, pneumatic, or hydraulic control inputs.

The retaining force can be controlled by remote operation and in an automated manner. No human input or interaction is required. In particular the retaining force can be changed while a vehicle comprising the bale forming apparatus is moved over ground. The retaining force can therefore be changed fully automatically while the bale forming apparatus forms a bale.

If the magnetic field is generated by an electric coil or spool, the strength of the magnetic field generated by the field generator is determined by an electric current for the field generator. A control unit can control this current in a remote operation. If a permanent magnet generates the magnetic field and if an actuator can move the permanent magnet or a magnetic shield with respect to the hydraulic system, the control unit can control this actuator in a remote manner.

In both possible implementations of the field generator no mechanical or hydraulic connection between the control unit and the retaining device comprising the field generator is required. In particular the control unit can switch on or off the current. Thanks to the invention it is possible that the same control unit of a bale forming apparatus controls several retaining devices with field generators which are mounted on board of this baler. The control unit can also be arranged in a remote location, i.e. not on board of the bale forming apparatus but e.g. on board of a pulling tractor, and can transmit control inputs for the field generator by a wired or wireless data connection.

The invention can easily be integrated into and implemented in an existing retaining device. Only a field generator has to be added to the existing retaining device for an existing pivotal bale forming member. The bale forming member needs not to be amended at all. Before operation the hydraulic system has to be filled with a magneto-rheological fluid. For enabling the hydraulic system to be filled with this fluid, the hydraulic system needs not to be changed at all. A hydraulic system already be implemented on board of a bale forming apparatus can further be used by replacing the hydraulic fluid used up to now in the hydraulic system with a magneto-rheological fluid or by adding magnetic particles to the already used hydraulic fluid without the need of replacing the rest of the retaining device or of replacing the bale forming member.

Thanks to the invention it is possible to implement the entire retaining device as a black box with defined mechanical and electrical interfaces. An amendment can often be implemented just by updating software. In the case of a malfunction such a black box can quickly be replaced with a new one.

### PREFERED EMBODIMENTS

Preferably the hydraulic system of the baler according to the invention is already filled with a magneto-rheological fluid. The invention, however, also refers to a baler with a field generator and a hydraulic system not yet or currently not filled with the magneto-rheological fluid, e.g. a baler before the first operation or a baler to be inspected or to be maintained or repaired.

Preferably the field generator is positioned in the interior of the hydraulic system. This embodiment better protects the field generator from mechanical impacts and from further environmental impacts (heat, moisture, dirt, debris, shocks, e.g.). Such impacts may damage the field generator. The hydraulic system provides a mechanical shield for the field generator which shield inhibits such damages.

In one implementation an energy source, e.g. an electric generator, a battery, or a connection to a public energy supply, is mounted outside of the hydraulic system. An electric connecting member, e.g. several electric lines, connects the field generator in the interior of the hydraulic system with the energy source.

In one embodiment the hydraulic system comprises at least one piston-cylinder device. A piston separates a base-side chamber from a rod-side chamber in the interior of the cylinder and can move in the interior of a hydraulic cylinder. The cylinder is filled or can be filled with a hydraulic fluid and thereby with a magneto-rheological hydraulic fluid. The piston is mechanically connected with the pivotal bale forming member. At least one fluid line is guided through the piston head of the piston. The or every fluid line connects the rod-side chamber in the cylinder with the base-side chamber in the same cylinder. The field generator generates the magnetic field in the or every fluid line guiding through the piston in the interior of the piston-cylinder device.

This embodiment saves a fluid line bypassing the piston. Such a bypassing fluid line can be damaged by external mechanical impacts. Implementing the bypassing fluid line requires an aperture in the cylinder's surface. The embodiment avoids the need of such an aperture. The piston head provides a mechanical shield for the fluid line in the piston head. As the overall cross-sectional area of the fluid line(s) is smaller than the two chambers in the cylinder, a small change of the field strength causes a high change of the viscosity and therefore rheology of the fluid in the fluid line and a quick change of the yielded retaining force. The field generator can be implemented with little space and with small energy consumption.

In one implementation the field generator - or a part of the field generator - and at least one fluid line are positioned in the interior of the piston. The field generator generates a magnetic field in the or every fluid line. This implementation provides a mechanical shield for every fluid line and for the field generator - the piston itself serves as this mechanical shield. No additional protecting means is required. In the case of a field generator with at least one electric coil or spool a respective one of the electric lines for supplying the field generator is preferably also positioned partially in the interior of the piston, e.g. guided through the piston rod.

In one embodiment of this implementation the field generator comprises a source for the magnetic flux, e.g. an electric coil or spool. This flux source is entirely positioned in the interior of the piston.

Preferably the or every fluid line is positioned between the flux source and the circumferential surface of the piston head. In the case of several parallel fluid lines in the piston head these fluid lines encircle the flux source. This embodiment enables to implement a small flux source which nevertheless provides a sufficient magnetic field.

In an alternative implementation the fluid line bypasses the piston. The magnetic field is generated in the fluid line bypassing the piston.

The flux source can comprise an electric coil or spool surrounding the fluid line or can comprise a permanent magnet. In the second implementation an actuator can move the permanent magnet or a magnetic shield with respect to the fluid line.

Preferably the magnetic flux lines of the generated magnetic field run perpendicular or at least angularly to the or every guiding direction in which the or at least one fluid line guides the hydraulic fluid. This embodiment provides with a higher probability the desired effect that several magnetizable particles in the magneto-rheological fluid are bond together. These particles form several clusters extending parallel to the flux lines. Therefore these clusters extend perpendicular or angularly to the guiding direction of the fluid line. These clusters therefore change the viscosity of the hydraulic fluid in the fluid line. Increasing the field strength quickly yields further or larger clusters and increases the viscosity and therefore the provided retaining force. Decreasing the field strength makes some particles to be released again such that some clusters vanish or are split up. This effect decreases the viscosity and therefore the provided retaining force.

According to the invention the field generator generates a magnetic field in a part of the hydraulic system, e.g. in a fluid line or in the interior of a hydraulic cylinder. Preferably the hydraulic fluid in the hydraulic system comprises several particles which can be magnetized. Such a magneto-rheological fluid can be produced by adding the magnetizable parts to usual hydraulic fluid. The particles can be added before filling the hydraulic fluid into the hydraulic system or to the hydraulic fluid already being in the hydraulic system. It is neither necessary to use a specific fluid nor to use a specific hydraulic system. As long as no magnetic field is generated and applied to the part of the hydraulic system, the hydraulic system with the hydraulic fluid operates as a conventional hydraulic system.

Preferably a data-processing control unit generates control inputs for the field generator. The field generator applies a magnetic field with a strength value depending on these control inputs. Preferably the field generator amends the field strength at least once while a bale is created. This embodiment allows varying the density of the bale over the bale's diameter, e.g. to create a bale with a dense torus and a soft core. Thanks to the invention the retaining force is changed very quickly while the bale is created. This change can automatically be triggered by a control unit and does not require an input from a human operator. Changing the retaining force provides a varying density of the bale over its diameter. It is possible to automatically create a round-cylindrical bale with a soft core and a dense outer shell around this soft core.

In one embodiment a bale parameter sensor measures a value indicative of a dimension or of the weight or of the density of the bale or of the amount or density or further characteristic of the loose material to be pressed. The control unit generates control inputs for the field generator depending on values from the bale parameter sensor. This embodiment allows adapting the field strength and thereby the retaining force to the bale or to the loose material to be pressed. It is possible to change the field strength as soon as the measured value reaches a given threshold.

Preferably a biasing member tends to pivot the pivotal bale forming member into one direction. This biasing member operates independently from the field generator and also tends to pivot the bale forming member if no hydraulic fluid is moved through the hydraulic system. Thanks to the biasing member the pivoted bale forming member can nevertheless operate. The biasing member can comprise at least one helical spring or a further single-acting actuator, e.g. a single-acting piston-cylinder device.

In a preferred implementation the field generator comprises an electric coil or spool through which an electric current can flow. The amperage of this current or the voltage is changed such that the strength of the magnetic field is amended or the magnetic field is switch on or off. It is also possible that the magnetic field is generated by at least one permanent magnet. For amending the field strength the permanent magnet is moved with respect to the hydraulic system. Or a magnetic shield is placed between the permanent magnet and the hydraulic system. This magnetic shield is removed again for decreasing or increasing the field strength.

The retaining device according to the invention can be used in different parts of a bale forming apparatus and for different steps while a bale is formed. Different possible applications of the invention are described in the following.

In two applications (pressing belt application and pressing roller application) the increasing round-cylindrical bale in the drum-shaped bale forming chamber applies an expanding pressure onto a bale pressing means, e.g. onto at least one endless pressing belt or onto at least one pivotally mounted pressing roller. The pivotal bale forming member, e.g. a lever device carrying at least one deflecting roller, is mechanically connected with the bale pressing means. The expanding pressure of the increasing bale makes the pivotal bale forming member being pivoted. The retaining device is mechanically connected with the pivoting bale forming member. Thanks to the retaining device the pivotal bale forming member applies a retaining force onto the bale pressing means. The bale forming member is pivoted by the expanding force of the loose material against this retaining force. Thanks to the retaining device according to the invention this retaining force is controlled by changing the strength of the magnetic field.

In a further application (sidewall pivoting application) a cuboid bale is formed in a bale forming channel with a rectangle cross-sectional area. Several sidewalls, preferably four sidewalls, surround this bale forming channel. A pressing means, e.g. an oscillating piston or an auger, in the interior of the bale forming channel conveys loose material through the bale forming channel towards a channel outlet and presses the loose material to a bale.

At least one part of a sidewall of the bale forming channel is pivotally mounted. Preferably the pressing means operates in a front segment of the bale forming channel and the or every pivotal sidewall part belongs to a casing surrounding a rear segment adjacent to the channel outlet. The expanding force of the loose material tends to pivot the or every pivotal sidewall part outwardly. The retaining device controls the pivoting of the pivotal sidewall part and applies a retaining force onto the or onto at least one pivotal sidewall part.

In a further application (ramp pivoting application) the retaining device controls the pivoting of a ramp. A bale formed in the drum-shaped bale forming chamber or in the rectangular bale forming channel rolls or is shifted over this ramp and is afterwards deposited onto the ground. The invention makes it possible to adapt the pivoting of the ramp to a parameter of the bale, in particular to the bale's weight. In one implementation the weight of the bale pivots the ramp downwards against the retaining force of the retaining device.

In yet a further application (tilting unit application) the ejected round bale rolls against a pivotal member of a tilting unit, e.g. against a pivotal rod. Thereby the round-cylindrical bale is tilted and the tilted bale is deposited on a front face on the ground. Therefore the round-cylindrical bale cannot roll downwards. The retaining device controls the pivoting of the pivotal tilting unit member, e.g. depending on a parameter of the bale and/or in the inclination of a vehicle with the baler. The pivotal tilting unit member is pivoted by the rolling bale and against the retaining force yielded by the retaining device with the field generator.

In one application the bale is wrapped in the bale forming chamber into a web of wrapping material. The web is inserted into the bale forming chamber. The inserted web is clamped between the rotated bale and a bale forming means. On its way from a wrapping material reservoir to the bale forming chamber the clamped web is guided under tension around a web deflecting member and pivots this web deflecting member. The retaining device according to the invention controls the pivoting of this web deflecting member. The web deflecting member is pivoted against the controlled retaining force applied by the retaining device.

In one application (tailgate damping application) the bale forming chamber is surrounded by a moveable casing part, e.g. a pivotal tailgate or a pivotal door, and a fixed casing part. The moveable casing part can be moved with respect to the fixed casing part. The retaining device controls the pivoting of the moveable casing part, in particular before the moveable casing part reaches its end position. The movement of the movable casing part is dampened.

The bale forming apparatus may be a part of a vehicle, e.g. of an agricultural harvester. The hydraulic system may completely be implemented on board of the bale forming apparatus. It is also possible that the hydraulic system is partly implemented on board of the bale forming apparatus and partly on board of a further vehicle, e.g. a tractor, which pulls the vehicle with the bale forming apparatus over ground.

The invention can be used in a bale forming apparatus being a part of an agricultural harvester which is moved over ground. This vehicle picks up loose material from the ground or is otherwise supplied with loose material, conveys the picked-up loose material to a pressing chamber, and forms a bale in the pressing chamber. One possible application (downholder damping application) of the invention is to control the pivoting of a downholder unit arranged above the pick-up unit. The picked-up loose material is conveyed through a channel above the pick-up unit and below the downholder unit and pivots the downholder unit against the force of gravity upwards and away from the pick-up unit. In one implementation the crop material lifts the downholder unit against the controlled retaining force of a retaining device with a field generator.

An energy source for providing the field generator with electric energy can be mounted on board of the harvester. It is also possible that the energy source is mounted on board of a further vehicle which is mechanically and electrically connected with the harvester and pulls the harvester.

In one embodiment an inclination sensor measures the current inclination of this agricultural harvester. The field generator generates a magnetic field depending on a value measured by this inclination sensor.

In one implementation the tailgate damping application or the tilting unit application is combined with an inclination sensor or with a bale parameter sensor, e.g. a sensor for the bale diameter. The pivoting of the moveable casing part is controlled depending on the measured inclination and/or on the measured bale parameter.

The retaining device with the field generator can also be used in a stationary bale forming apparatus, e.g. a stationary plant for forming bales from cartridges, plastic parts, or further recycling material.

These and other aspects of the invention and of the preferred embodiments will be even more apparent from the detailed embodiments as described below and will be elucidated in detail there.

### BRIEF DESCRIPTION OF THE DRAWINGS

In the following several embodiments of the invention are described by means of the following figures:
Fig. 1 shows in a side view a round baler using the invention for several applications;
Fig. 2 shows in a side view a part of a cuboid baler using the invention;
Fig. 3 shows a retaining piston-cylinder device according to the invention and a bypass fluid line;
Fig. 4 shows the piston-cylinder device from Fig. 3 in a more detailed view;
Fig. 5 shows the piston-cylinder device of Fig. 3 and Fig. 4 in a perspective view;
Fig. 6 shows the hydraulic system with a fluid comprising several the magnetizable parts not being under the influence of a magnetic field;
Fig. 7 shows the hydraulic fluid with the magnetizable parts of Fig. 6 after being clustered under the influence of a generated magnetic field with magnetic flux lines.

### DETAILED DESCRIPTION OF EMBODIMENT

Every embodiment described below is used on board of an agricultural harvester which is pulled over ground and comprises a bale forming apparatus for forming round-cylindrical or cuboid bales from loose crop material.

In a pressing belt application the invention is used in a round baler for controlling the tension of at least one endless flexible pressing belt. This round baler creates round-cylindrical bales in a drum-shaped bale forming chamber by means of one endless flexible pressing belt or several parallel pressing belts and additionally at least two pressing rollers. The bale forming chamber has the shape of a drum and is partially surrounded by the pressing belt(s).

The round baler operates as follows:
The baler is pulled over ground in a travelling direction.

A pick-up unit picks up loose crop material (hay, straw, grass, e.g.) from the ground.

The picked-up crop material is conveyed through a feeding channel towards a crop material inlet guiding into the bale forming chamber. A conveying rotor with rigid tines engages from above or from below into the feeding channel and conveys the crop material towards the inlet guiding into the bale forming chamber.

Optionally several knives engage from below through longitudinal slots or from above in the channel bottom into the feeding channel. The conveying rotor presses the crop material through gaps between adjacent knives. The crop material is cut into small pieces.

The conveying rotor injects under pressure the crop material through the inlet into the bale forming chamber. In the embodiment this crop material inlet is limited from below by a so-called starter roller and from above by a further starter roller or by segments of the pressing belts guided around a deflecting roller.

The endless elastic pressing belts are driven and rotate the injected crop material.

An increasing round-cylindrical bale is created under pressure in the drum-shaped bale forming chamber.

The bale is wrapped in the bale forming chamber into wrapping material, e.g. into a net or a plastic sheet or several strands of twine.

A tailgate is opened and the completed and wrapped bale is ejected out of the bale forming chamber.

Optionally a wrapper behind the bale forming chamber wraps the ejected bale on a wrapping table into plastic sheet (baler-wrapper combination).

The ejected bale rolls over a pivotal ramp and is deposited behind the baler on the ground.

Optionally a tilting unit tilts the round-cylindrical wrapped bale onto a front face of the bale.

Fig. 1 shows a round baler in which the pressing belt application and further applications of the invention are used. This round baler is mechanically coupled with a propelled tractor or combine harvester or field chopper (not shown) by means of a towing unit 7 and is pulled over ground in a travelling direction TD (in Fig. 1 from left to right). A drive train connection, an electric connection, and a data connection are also established between the round baler and the pulling vehicle. The drawing plane of Fig. 1 is in the middle of the baler.

Fig. 1 shows the following further parts:
a left wheel 49 and a right wheel (not shown) carrying the baler's frame,
a pivotally mounted pick-up unit with a pick-up unit frame 1 and several spring-mounted tines 2.1, 2.2, ... arranged around a driven pick-up drum (not shown) carried by the pick-up frame 1,
a left guiding wheel 57 and a right guiding wheel (not shown) for guiding the pick-up unit over ground,
a pivotally mounted downholder unit with an idling downholder roller 11 mounted on the free end of a pivotal downholder frame 55 and positioned angularly above the pick-up unit 1, 2.1, 2.2, ...,
a conveying rotor 4 comprising several rigid conveying stars with rigid tines which engages from above into the feeding channel,
a pivotally mounted feeding channel bottom 5 limiting the feeding channel from below, and
several parallel knives 18 engaging from below through longitudinal slots in the feeding channel bottom 5 into the feeding channel.

The terms "left" and "right" refer to the travelling direction TD.

The pick-up tines 2.1, 2.2, ... are spring-mounted on the rotating pick-up drum. In the side view of Fig. 1 this pick-up drum is rotated anti-clockwise. The spring-mounted pick-up tines 2.1, 2.2, ... pick up loose crop material from the ground and convey the crop material below the downholder unit 11, 55 and toward the feeding channel above the feeding channel bottom 5. The downholder unit 11, 55 is pivotally mounted at the baler's frame. The picked-up crop material can pivot the downholder unit with the downholder frame 55 holding the downholder roller 11 upwards against the force of gravity. The force of gravity tends to pivot the downholder unit 11, 55 downwardly.

In the embodiment the baler does not comprise a downholder actuator which actively raises or lifts the downholder unit 11, 55 against the force of gravity. Two stop elements (not shown) limit the upward and downward movement of the downholder unit 11, 55. In one implementation a chain limits the downward movement. In the embodiment a sensor 53 adjacent to the pivoting axis of the downholder unit 11, 55 measures the current rotating angle, i.e. the current rotational position of the pivotal downholder unit 11,15 with respect to the baler's frame.

The crop material is injected through a crop material inlet positioned between the driven starter rollers 8.1, 8.2 into the bale forming chamber. A bale increases in the bale forming chamber. Fig. 1 shows simultaneously two situations during the creation of a bale, namely an intermediate bale B.1 shortly after the beginning of the bale forming process and the completed bale B (required diameter reached). In reality the same bale first reaches the shape B.1, increases further and finally reaches the shape B.

With the exception of the crop material inlet between the starter rollers 8.1, 8.2 the bale forming chamber is entirely surrounded by several parallel pressing belts 10 and by the starter rollers 8.1, 8.2. The pressing belts 10 and thereby the bale forming chamber are surrounded by a casing. The casing comprises a fixed front housing and a pivotal tailgate 23. The parallel pressing belts 10 are guided around several deflecting rollers. At least one of these deflecting rollers is driven and moves the pressing belts 10. At least one deflecting roller - in the pressing belt application three deflecting rollers operating as idler rollers - are mounted on the free end of a pivotal tensioning arrangement (to be described below). The other deflecting rollers - i.e. those rollers which are not mounted on the tensioning arrangement but at the front housing or at the tailgate 23 - are stationary, i.e. cannot be shifted perpendicular to their respective rotating axes. The pressing belts 10 and the starter rollers 8.1, 8.2 rotate this increasing bale B.1, B.

The baler of Fig. 1 has a front housing 59 which is rigidly mounted on the frame. This front housing 59 is covered by a left cover plate 17 and a corresponding right cover plate (not shown). Every cover plate can laterally be moved away from the front housing 59 and from the tailgate 23 for enabling maintenance work and can be moved back.

The tailgate 23 is pivotally mounted by means of a traversal bearing 21 and can pivot with respect to the front housing 59. The traversal bearing 21 is rigidly connected with the front housing 59. A left hydraulic tailgate piston-cylinder device 58 and a corresponding right tailgate piston-cylinder device (not shown) can lift up the tailgate 23 against the force of gravity. These piston-cylinder devices are preferably not used while the increasing bale B.1, B is formed.

Several parallel pressing belts 10 are guided around several moveable and stationary guiding rollers (deflecting rollers). Fig. 1 shows
three moveable guiding rollers 3.1, 3.2, 3.3,
several stationary guiding rollers 9.1, 9.2 which are rotatably mounted at the front housing 59, and
several stationary guiding rollers 6.1, 6.2, ... which are rotatably mounted at the tailgate 23.

These three moveable guiding rollers 3.1, 3.2, 3.3 are rotatably mounted between a left inner tensioning arm and a corresponding right inner tensioning arm of an inner tensioning member 12.1. The inner tensioning member 12.1 is rigidly mounted on the traversal bearing 21. A left outer tensioning arm and a corresponding right outer tensioning arm of an outer tensioning member 12.2 are also rigidly connected with the traversal bearing 21. These four tensioning arms 12.1, 12.2 of the tensioning members belong to a tensioning arrangement for the pressing belts 10.

The entire tensioning arrangement 12.1, 12.2 can pivot around the traversal bearing 21. In one embodiment the tailgate 23 is directly mounted at the traversal bearing 21. In a further embodiment the tailgate 23 is pivotally mounted at the outer tensioning arms 12.2 in a pivoting axle which is spaced apart from the traversal bearing 21. According to the further embodiment the tailgate 23 is carried by the tensioning arrangement 12.1, 12.2 and not directly carried by the front housing 59. This feature enables a more uniform pressure application onto the loose crop material in the bale forming chamber.

As the conveying rotor 4 continuous to inject crop material into the bale forming chamber, an increasing amount of loose material is collected and pressed in the bale forming chamber and tends to expand. The starter rollers 8.1, 8.2 and the stationary guiding roller 6.1, 6.2, ..., 9.1, 9.2 cannot be shifted laterally. The expanding crop material presses from the interior of the bale forming chamber against the pressing belts 10 surrounding the bale forming chamber. As a reaction on the expanding pressure of the crop material only the tensioning arrangement 12.1, 12.2 with the guiding rollers 3.1, 3.2, 3.3 can pivot. The endless pressing belts 10 are elastic. Therefore the size of the bale forming chamber increases. This increase is performed against the retaining force provided by a retaining device with a field generator (will be described below) for the tensioning arrangement 12.1, 12.2 and for the elastic pressing belts 10. The provided retaining force determines the pressure applied onto the loose material in the bale forming chamber and thereby the bale's density.

In the embodiment as shown in Fig. 1 the conveyor rotor 4 conveys crop material through the feeding channel above the bottom 5 towards a crop material inlet to the bale forming chamber. The bale forming chamber is surrounded by the pressing belts 10. The crop material inlet extends between the two driven starter rollers 8.1 and 8.2.

In order to form under pressure a round bale B.1, B in the bale forming chamber, the retaining device applies a retaining force via the tensioning arrangement 12.1, 12.2 onto the pressing belts 10. The expanding force applied by the crop material in the bale forming chamber onto the pressing belts 10 operates against this retaining force. The size of the bale forming chamber can only be enlarged against this retaining force. This combination and the injection of further crop material apply via the elastic pressing belts 10 a contracting pressing force onto the crop material in the bale forming chamber such that the loose material in the bale forming chamber is compressed and a round bale B.1, B is formed under pressure.

It is desired to control the density of the bale B.1, B while creating it. This density may be varied during the bale formation within the bale B.1, B in a desired manner such that a bale with varying density over its diameter is created. It may be required that a bale with a soft core and a dense shell around the core is created - or a bale with a dense core and a soft shell around the core. For controlling the bale density the retaining force applied by the retaining device is changed in a controlled manner while the bale B.1, B is formed. The retaining force is amended depending on the measured increasing diameter of the round-cylindrical bale B.1, B in the bale forming chamber. Thanks to this implementation the variation of the retaining force is adapted to the actual input of crop material into the bale forming chamber.

In one implementation an angle sensor 56 measures the current pivoting angle of the tensioning arrangement 12.1, 12.2. This measured pivoting angle is a value indicative of the current bale diameter. The angle sensor 56 can be implemented as a potentiometer or a contactless distance sensor, e.g.

In one implementation the baler's control unit automatically changes the provided retaining force not only in dependence from the bale diameter but also from further measured parameters. Two examples: A friction sensor measures the friction between the rotating bale B in the bale forming chamber and at least one sidewall of the bale forming chamber. A moisture sensor measures the moisture of the crop material. One way of control: The higher the measured friction or moisture is the lower is the provided retaining force. In one example the sum of the measured friction force and the provided retaining force remains approximately constant.

In one implementation the amount of crop material injected into the bale forming chamber is measured. The control unit triggers the retaining device with the field generator depending on the measured crop material amount. In a further implementation the control unit triggers the retaining device with the field generator according to a time-based scheme, i.e. the control unit triggers the field generator to change the field strength after a given time period. This implementation does not require a sensor for the bale parameter. But it is not possible to react on different impacts, e.g. a varying input of loose crop material.

In the pressing belt application the retaining device comprises a left hydraulic piston-cylinder device and a right piston-cylinder device. The terms "left" and "right" refer to the travelling direction TD of the baler. The bale forming chamber and the tailgate 23 are arranged between these two devices. Two parallel lateral piston-cylinder devices are used for preventing canting. Every piston-cylinder device comprises a cylinder (tube) and a piston. The cylinder (tube) is on the base side pivotally connected with the tailgate 23 or with the front housing 59 and on the rod side with the tensioning arrangement 12.1, 12.2 for the pressing belts 10. The cylinder is filled with a hydraulic fluid, see below.

The piston comprises a piston head and a piston rod rigidly connected with the piston head. In one implementation of the pressing belt application the piston rod is pivotally connected with the pivotal tensioning arrangement 12.1, 12.2. More precisely: The tensioning arrangement 12.1, 12.2 comprises at least one left tensioning arm and at least one right tensioning arm. The deflecting rollers of the tensioning arrangement 12.1, 12.2 are rotatably mounted between a left and a right tensioning arm. In the embodiment the deflecting rollers are mounted between the arms of the inner tensioning member 12.1. The left piston rod is mechanically connected with a left tensioning arm. The right piston rod is connected with a right tensioning arm.

As mentioned above, the pressing belts 10 of the baler of Fig. 1 are tensioned by a tensioning arrangement. This tensioning arrangement comprises a left inner tensioning arm, a left outer tensioning arm, and two corresponding right tensioning arms forming the tensioning members 12.1, 12.2. Both tensioning members 12.1, 12.2 are rigidly mounted at the traversal bearing 21 and can jointly rotate around a horizontal axis perpendicular to the travelling direction TD with respect to the front housing 59. The tailgate 23 is pivotally mounted at this tensioning arrangement 12.1, 12.2.

As just mentioned, the retaining device of this baler comprises a left piston-cylinder device and a corresponding right piston-cylinder device (not shown) which are arranged approximately vertically. Fig. 1 shows a piston rod 22 and a cylindrical tube 14 of the left piston-cylinder device. The piston head (not shown in Fig. 1) of this piston-cylinder device is connected with the piston rod 22, is positioned in the interior of the cylinder 14, and moves along the longitudinal axis of the cylinder (tube) 14. At its lower end the cylinder 14 is pivotally connected with the tailgate 23 in an axle 15. At its upper end the piston rod 22 is pivotally connected with the left outer tensioning arm of the outer tensioning member 12.2 in an axle 13. A corresponding right piston-cylinder device is connected with the tailgate 23 and with the tensioning arrangement 12.1, 12.2 in a similar way.

The increasing bale B.1, B applies an expanding force onto the pressing belts 10. This expanding force increases the size of the bale forming chamber. The pressing belts 10 pull at the guiding rollers 3.1, 3.2, ..., 6.1, 6.2, ..., 9.1, 9.2, ... This causes the moveable guiding rollers 3.1, 3.2, 3.3 to be shifted perpendicular to the rotating axes and against the force of the retaining device. The expanding force transferred by the pressing belts 10 onto the tensioning arrangement 12.1, 12.2 positioned in the cylinder tends to pull the piston rod 22 out of the cylinder 14 against the retaining force applied by the retaining device.

The retaining device of the baler of Fig. 1 comprises the two piston-cylinder devices with the piston rod 22 and the cylinder 14 and additionally two passive retaining elements (biasing elements), namely a left spring 16 and a corresponding right spring (not shown). The left spring 16 is pivotally connected with the tailgate 23 (lower end) and is pivotally connected with the left outer tensioning arm of the outer tensioning member 12.2 (upper end). A corresponding right spring is pivotally connected with the right outer tensioning arm. The springs 16 tend to move the left outer tensioning member 12.2 downwards. The tensioning arrangement 12.1, 12.2 can be pivoted upwards against the biasing force of the biasing elements 16. The inner tensioning member 12.1 is rigidly connected with the outer tensioning member 12.2. The expanding force applied by the crop material in the bale forming chamber operates against the two parallel piston-cylinder devices and against the two parallel passive retaining elements (springs 16).

The increasing bale B.1, B applies the expanding force onto the pressing belts 10. The pressing belts 10 are guided around the three moveable deflecting rollers 3.1, 3.2, 3.3 between the two pivotal inner tensioning arms 12.1. The further deflecting and guiding rollers 6.1, 6.2, ..., 9.1, 9.2, ... cannot be shifted laterally. The tensioning arms 12.1, 12.2 are pivoted by the pressing belts 10. The process of pivoting the tensioning arrangement 12.1, 12.2 pulls the two piston rods 22 out of the two cylinders 14. The connected piston heads are moved through these cylinders 14 upwards. As a consequence the base-side chambers of the piston-cylinder devices increase and the rod-side chambers decrease. Moving the piston heads upwards requires surpassing the retaining force.

In a pressing roller application the invention is also used in a round baler which creates round-cylindrical bales in a bale forming chamber. In contrast to the pressing belt application the bale forming chamber is surrounded by a plurality of pressing rollers coming in contact with the loose crop material and not by parallel pressing belts 10. The rotating axis of such a pressing roller is horizontal and is perpendicular to the travelling direction TD of the baler. The pressing rollers are implemented like the starter rollers 8.1, 8.2 of Fig. 1 and are positioned parallel to these starter rollers 8.1, 8.2. In order to control the density of the bale while the bale B.1, B is created, at least one pressing roller is mounted on the free end of a pivotal lever device or rocker device - like the three deflecting rollers 3.1, 3.2, 3.3, ... of the pressing belt application. The or every moveable pressing roller is mounted between a left lever arm and a right lever arm.

A retaining device is pivotally connected with the lever device for the moveable pressing rollers and with the front housing 59 or with the tailgate 23. This retaining device operates similar to that of the pressing belt application (Fig. 1) and applies a retaining force onto the lever device carrying the moveable pressing roller(s). The lever device can only be pivoted against the retaining force from this retaining device.

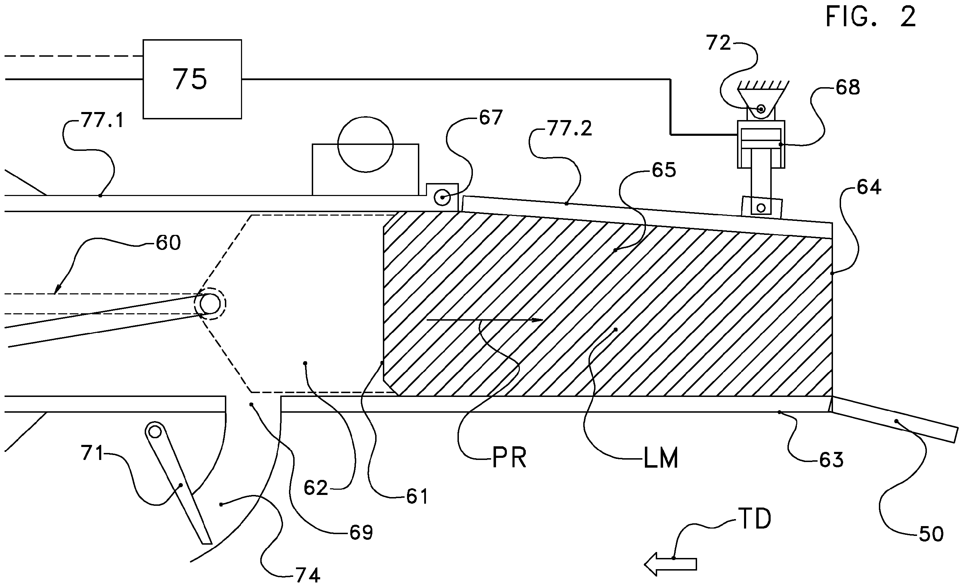

In a pivotal sidewall application (Fig. 2) the invention is used in a cuboid baler. This cuboid baler creates cuboid bales by means of an oscillating pressing piston. The cuboid baler operates as follows:
A pick-up unit picks up loose crop material from the ground.

The picked-up crop material is conveyed through a feeding channel and through a subsequent pre-pressing channel towards a crop material inlet guiding into the bale forming chamber having the shape of a pressing channel with four sidewalls.

A conveying rotor engages from above into the feeding channel and conveys the picked-up loose material towards the pre-pressing channel. Several stuffing tines engage from above into the pre-pressing channel, pre-press the crop material by performing stuffing strokes, and load the pre-pressed crop material through the inlet into the pressing channel by performing loading strokes.

The oscillating piston presses the crop material to a string of crop material and thereby moves the string away from the inlet and towards an outlet of the pressing channel.

The pressing channel comprises a front segment in which the piston oscillates and a rear segment between the pressing piston and the outlet. At least one sidewall comprises a front sidewall part and a pivotal rear sidewall part. The piston oscillates along the front sidewall part belonging to the front segment. The rear sidewall part belongs to the rear segment and is pivotally connected with the front sidewall part.

Pivoting this rear sidewall part changes the cross-sectional area of the rear segment of the pressing channel and changes the pressure applied by the sidewalls and the pressing piston onto the string of crop material in the rear segment.

A tying device guides strands of twines around the top edge of the string and through the string. A knotter knots twine strands. By guiding and knotting twine strands a wrapped cuboid bale is formed.

The wrapped cuboid bale is shifted through the outlet and over a ramp and is deposited on the ground.

Fig. 2 shows the following parts of the cuboid baler:
a pre-pressing channel 74,
several stuffing tines 71 engaging from above into the pre-pressing channel 74,
an inlet 69 guiding into the pressing channel 65,
a fixed front top wall part 77.1 and a pivotal rear top wall part 77.2,
a traversal axle 67 for carrying the front edge of the pivotal top wall part 77.2,
a traversal bearing 72 which carries the pivotal rear top wall part 77.2,
a thoroughgoing bottom wall 63,
an oscillating pressing piston head 62 with a rectangular piston head surface 61,
a pressing piston rod 60,
a retaining device 68 for the pivotal wall part 77.2 mounted at the bearing 72,
a control unit 75 for the retaining device 68,
a rectangular outlet 64 of the pressing channel 65, and
a pivotal ramp 50 pivotally mounted at the rear edge of the bottom wall 63.

According to this application the top wall is separated into two parts 77.1, 77.2. In an implementation every sidewall (not shown) is also separated into two parts. The pressing channel 65 is surrounded by the top wall 77, the bottom wall 63, and two sidewalls (not shown). The pressing piston 60, 62 presses the injected loose material LM into the pressing direction PR towards the outlet 64.

The pivotal rear wall part 77.2 belongs to the rear segment and can pivot with respect to the front wall part 77.1 around an axle 67. This axle 67 is perpendicular to the pressing direction PR and to the drawing plane of Fig. 2. The retaining device 68 controls the pivoting of the pivotal sidewall part 77.2 around this axle 67. The pivotal sidewall part 77.2 is pivoted away from the bottom wall 63 by the crop material LM against the retaining force provided by the retaining device 68. Therefore the cross-sectional area of the rear segment of the pressing channel 65 can only be enlarged against this retaining force.

In all three applications just mentioned a retaining device 68 with a hydraulic piston-cylinder device is used. The piston head of this hydraulic piston-cylinder device divides the cylinder into two chambers. A piston is moved in this cylinder while a bale is formed. The rod-side chamber is reduced and the base-side chamber is enlarged while the bale is created.

The following description applies to every application of a retaining device with a field generator which has just been described or will be described below. In contrast to known balers and according to a preferred embodiment of the retaining device at least one fluid line, preferably several parallel lines, are guided through the piston head. These fluid lines are implemented as bores guiding through the piston head. In the described embodiment of the retaining device these fluid lines are positioned in the interior of the piston-cylinder device. No fluid line needs to be arranged outside the cylinder 14. No fluid line needs to connect the two piston-cylinder devices. In contrast the fluid lines are guided through the interior of the piston head. The invention enables arranging the fluid lines in the interior of the piston heads where the fluid lines are protected. The piston head is not moved with respect to the fluid lines.

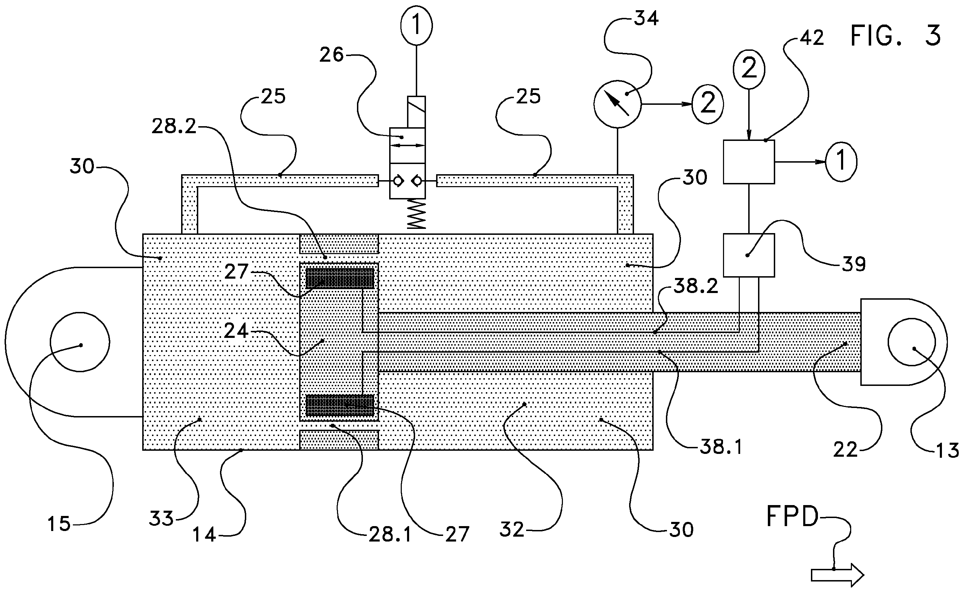

Fig. 3 shows schematically one piston-cylinder device of a retaining device according to the invention in a cross-sectional side view. This piston-cylinder device is used in the round baler of Fig. 1 and in the cuboid baler of Fig. 2.

The piston rod 22 is pivotally connected with the tensioning arrangement 12.1, 12.2 or with the traversal bearing 72 for the bale forming channel in a rod-side pivoting axle 13, cf. Fig. 1 and Fig. 2. The tubular cylinder 14 is pivotally connected with the tailgate 23 or with the pivotal sidewall part 77.2 in a base-side pivoting axle 15. The piston rod 22 is rigidly connected with the piston head 24. The piston head 24 divides the chamber within the cylinder 14 into a base-side chamber 33 and a rod-side chamber 32. The rod-side chamber 32 decreases while the bale B.1, B increases in the bale forming chamber as the piston 22, 24 is pulled out of the cylinder 14.

Several parallel fluid lines 28.1, 28.2, ... are guided through the piston head 24. These fluid lines 28.1, 28.2, ... connect the base-side chamber 33 with the rod-side chamber 32.

Both chambers 32, 33 in the interior of the cylinder 14 are filled with a hydraulic fluid 30 which preferably comprises a hydraulic oil. When the piston rod 22 is pulled out of the cylinder 14 in the direction FPD, fluid 30 is pressed from the rod-side chamber 32 at the rod end of the cylinder 14 through the connecting fluid lines 28.1, 28.2, ... in the piston head 24 into the base-side chamber 33 at the base end of the cylinder 14.

Moving the piston head 24 out of the cylinder 14 requires surpassing a retaining force such that the fluid 30 is pressed through the connecting fluid lines 28.1, 28.2, ... guided through the piston head 24. The summarized cross-sectional area of all fluid lines 28.1, 28.2, ... is much smaller than the coinciding cross-sectional area of the two chambers 32, 33. The retaining force depends on the summarized cross-sectional area of the fluid lines 28.1, 28.2 which remains constant during operation and depends on the viscosity (rheological property) of the fluid 30.

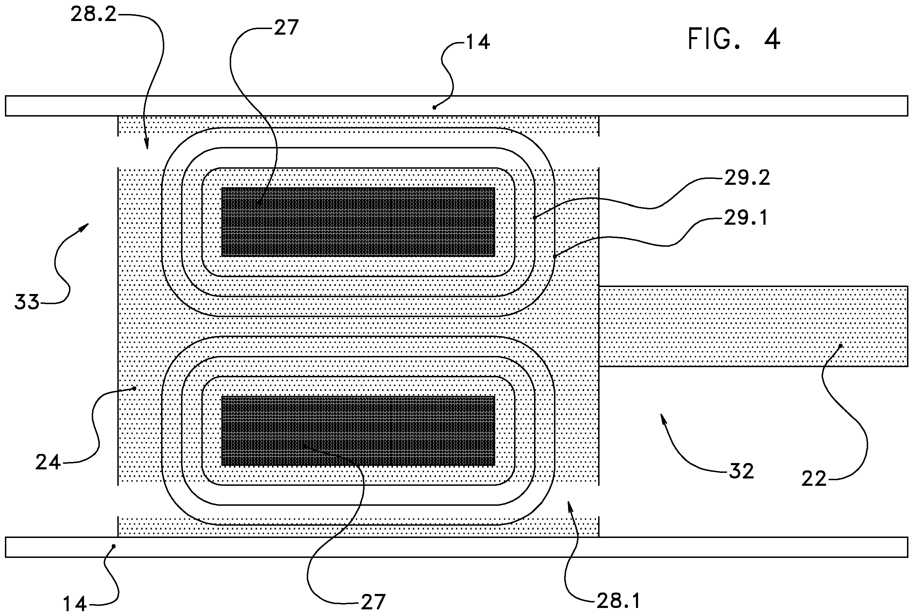

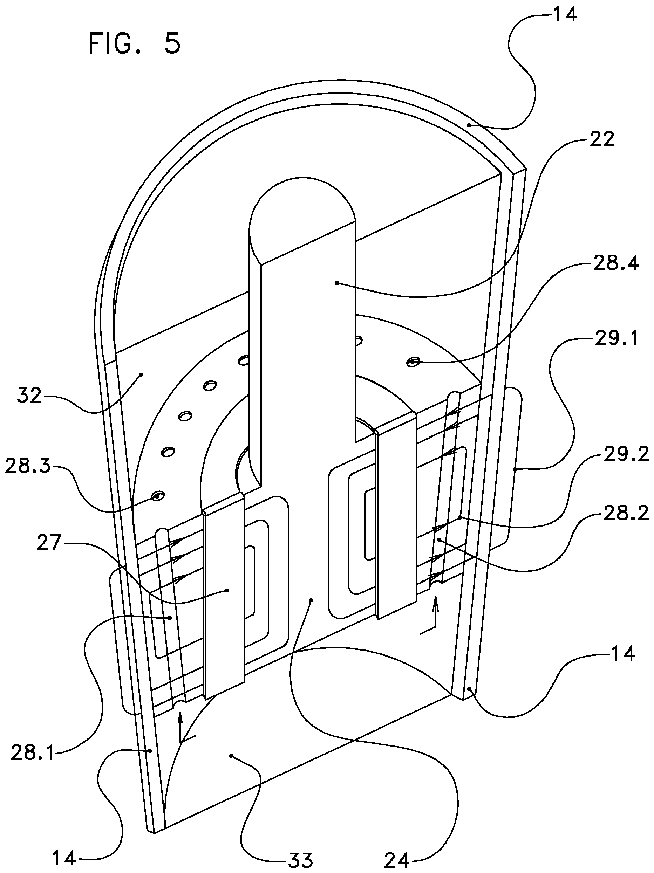

Fig. 4 shows the piston-cylinder device of Fig. 3 in a more detailed view. Only a part of the piston rod 22 is shown. Fig. 5 shows the piston-cylinder device of Fig. 3 and Fig. 4 in a perspective view. In Fig. 4 and Fig. 5 several parallel fluid lines 28.1, 28.2, ... are shown. These fluid lines 28.1, 28.2, ... are positioned in a circle around a center line running through the piston rod 22 and are guided through the piston head 24.

In the embodiment the fluid 30 in both chambers 32, 33 of the cylinder 14 of the retaining device comprises hydraulic oil and is provided with several small elongated or ball-shaped particles made of a metal which can be magnetized, e.g. made from iron or steel or copper. The fluid 30 therefore operates as an electro-rheological or magneto-rheological fluid. The viscosity and therefore the rheology of the fluid 30 is changed when the fluid 30 is exposed to a magnetic field.

It was already proposed to use a magneto-rheological fluid for other purposes. US 2010/0116606 A1 discloses a vibration damper for a motor vehicle. A piston 3 with a piston rod 4 is positioned in a cylindrical housing 1 with an inner pipe 2, cf. Fig. 1. The piston 3 divides the pipe 2 into an extension chamber 6 and a retraction chamber 5. Both chambers 5, 6 are filled with an electro-rheological fluid. A voltage is applied to an electrode 17 adjacent to the chamber 5, 6. Applying this voltage changes the viscosity of the fluid, cf. par. [0016]. By controlling the voltage the vibration damper is controlled.

US 2007/0176035 A1 discloses a rotary motion control device. A brake device B comprises a drive spool 2 which is fixed to a brake rotor 8 and a cup member 4. The drive spool 2 is connected with a prime mover which is to be decelerated and braked. A top plate 16 and a rotating disk 26 are positioned between the drive spool 2 and the cup 4. The disk 26 contains several pairs of disk-shaped permanent magnets 28 with altering magnetic orientations. The top plate 16 comprises a further set of disk-shaped permanent magnets 34. The brake rotor 8 is in a cavity between the top plate 16 and the cup 4. This cavity is filled with a magneto-rheological fluid. The position of the magnet 28 relative to the magnets 34 provides a magnetic field of varying strength.

The invention, however, is used in a bale forming apparatus for controlling the pivoting of a bale forming member, e.g. a tensioning arrangement or a sidewall part, while a bale B.1, B is created in the bale forming chamber.

As mentioned above the process of pressing fluid 30 out of the rod-side chamber 32 requires surpassing a retaining force. This retaining force depends on the viscosity of the fluid 30 in the connecting fluid lines 28.1, 28.2, .... The higher the viscosity is the higher is the retaining force which is provided and must be surpassed. The invention provides an easy way to control during operation the retaining force by changing the viscosity. In the embodiments for creating a round-cylindrical bale the viscosity is increased at least one time while the bale B.1, B is created. This embodiment yields a bale with a soft core and a dense torus (shell) around the core. Or the viscosity is decreased at least once such that a bale with a dense core and a soft torus (shell) around the dense core is created. Or the viscosity is amended to a measured property of the crop material.

As mentioned above the magneto-rheological fluid 30 comprises several parts which are magnetizable. To change the viscosity the hydraulic fluid 30 is exposed to a magnetic field. This magnetic field is generated in and around the connecting fluid lines 28.1, 28.2, ....

The magnetic field is generated by a field generator mounted on board of the baler. In the embodiment this field generator comprises at least one electric line having the form of a coil or spool through which an electric current flows. This coil is positioned in the interior of the piston head 24 such that the generated magnetic field is positioned in and around the connecting fluid lines 28.1, 28.2, ... In the embodiment the fluid lines 28.1, 28.2, ... encircles the coil, cf. Fig. 5. Electric lines 38.1, 38.2 for connecting this coil with a current source are guided through the interior of the piston head 24 and of the piston rod 22, cf. Fig. 3.

In a preferred embodiment the field generator does not comprise a part which has to be moved with respect to the piston 22, 24. No part of the fluid generator comes in contact with the hydraulic fluid 30 or with the cylinder 14. Therefore the entire retaining device with the two piston-cylinder devices can be implemented as a black box with mechanical interfaces (pivotal connections with the tensioning arrangement 12.1, 12.2 and with the tailgate 23 or the front housing 59, resp.) and with electrical interfaces (for the electric lines 38.1, 38.2 in the piston rod 22). The field generator does not require a mechanical or hydraulic interface.

Fig. 3, Fig. 4, and Fig. 5 show a magnetic flux source which generates a magnetic field. This magnetic flux source comprises an electric line arranged as a coil and serving as an electro-magnetic coil having the form of a torus 27. This torus 27 is positioned around an ideal center line running through the piston rod 22. The torus 27 is mounted in the interior of the piston head 24. A suitable electric isolation separates the magnetic coil 27 from the rest of the piston head 24. The piston head 24 serves as a mechanic shield for the torus 27. The fluid lines 28.1, 28.2, ... encircle this torus 27.

In Fig. 4 and Fig. 5 several parallel lines 29.1, 29.2, ... of magnetic flux are shown. The magnetic flux source 27 of the magnetic field generator creates a magnetic field which comprises these magnetic flux lines 29.1, 29.2, ...

In one embodiment the generated field 29.1, 29.2, ... aligns a part of the magnetizable elongated parts in the fluid 30 flowing through the fluid lines 28.1, 28.2, .... In a further implementation the generated field clusters magnetizable parts in the fluid 30 along the lines 29.1, 29.2, ... of magnetic flux through the fluid lines 28.1, 28.2, .... After the alignment or clustering all aligned elongated parts are orientated in the same direction. Or some parts form clusters extending along the flux lines 29.1, 29.2, ... and are bond to each other. The direction of the magnetic flux lines 29.1, 29.2, ... is perpendicular or at least angular to the direction in which the fluid 30 is pressed through the parallel connecting fluid lines 28.1, 28.2, ... The magnetizable parts are aligned or clustered parallel to the direction of the flux lines 29.1, 29.2, ... through the fluid lines 28.1, 28.2, ... In the embodiment the flux lines 29.1, 29.2, ... are partly perpendicular and partly angular to the connecting fluid lines 28.1, 28.2, .... The more magnetizable parts in the fluid 30 are aligned or clustered in this way the higher is the viscosity of the fluid 30 and therefore the provided retaining force which has to be surpassed.

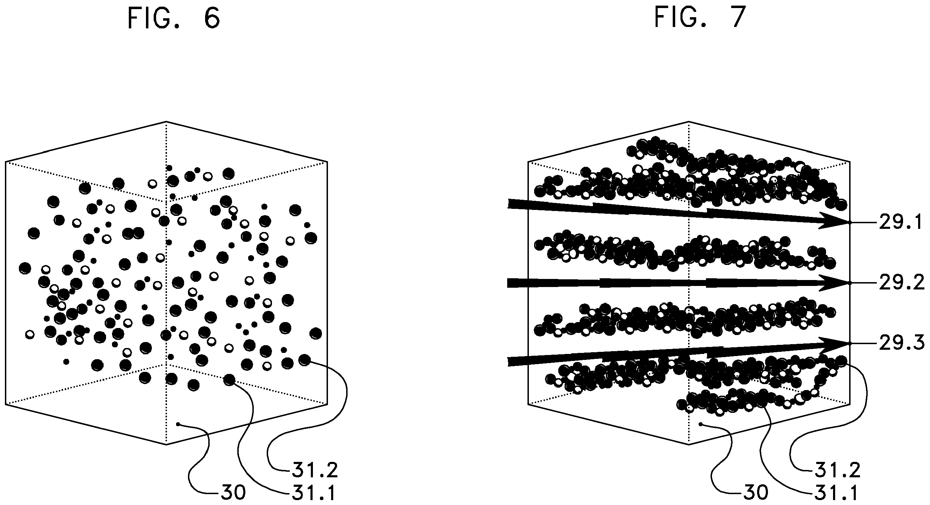

Fig. 6 and Fig. 7 show schematically the effect of several magnetic flux lines 29.1, 29.2, .... onto a fluid 30 with magnetizable particles 31.1, 31.2. This fluid 30 is therefore a magneto-rheological fluid. In Fig. 6 and Fig. 7 several particles 31.1, 31.2 are mixed into the fluid 30. The fluid 30 with the particles 31.1, 31.2 is in a cavity, e.g. in the interior of the cylinder 14. In Fig. 6 the particles 31.1, 31.2, ... are not subjected to the influence of a magnetic field. In Fig. 7 the cavity 14 is exposed to a magnetic field with several magnetic flux lines 29.1, 29.2, ... running through the cavity. The fluid lines 29.1, 29.2, ... apply a magnetic force onto the particles 31.1, 31.2 in the fluid 30. As can be seen in Fig. 7 the particles 31.1, 31.2, ... are clustered and form long clusters extending parallel to the magnetic flux lines 29.1, 29.2, ... Several particles 31.1, 31.2, ... are bond to each other.

In Fig. 3, Fig. 4, and Fig. 5 the magnetic flux source in the form of a torus 27 is shown. This torus 27 is formed by an electric coil or spool end is positioned in the interior of the piston head 24. Two electric lines 38.1, 38.2 connect the magnetic flux source 27 with an electric source 39, cf. Fig. 3. This electric source 39 is mounted on board of the baler or of the pulling vehicle and can be controlled, i.e. the voltage or amperage which the electric source 39 generates in the lines 38.1, 38.2 can be changed. The control unit 42 is connected with the electric source 39 and changes the amperage or voltage and changes by this the strength of the generated magnetic field 29.1, 29.2, ... The field generator of the embodiment comprises the magnetic flux source 27, the electric lines 38.1, 38.2, and the electric source 39.

As just mentioned the viscosity and therefore the retaining force to be surpassed depends on the amount of aligned or clustered magnetizable parts 31.1, 31.2, ... and on the extent of this alignment or clustering.

This amount of alignment/clustering and the extent depend on the strength of the generated magnetic field 29.1, 29.2, .... This field strength depends on the amperage of the electric current which flows through the magnetic flux source (torus 27) in the piston head 24. This current - or the corresponding voltage - is controlled by the control unit 42 mounted on board of the baler or of the pulling vehicle. The control unit 42 can change the amperage or voltage for the electro-magnetic coil 27.

While the bale B.1, B is formed and increases, fluid 30 is pressed from the rod-side chamber 32 through the fluid lines 28.1, 28.2, ... into the base-side chamber 33. The field generator 27, 38.1, 38.2, 39 generates and changes a magnetic field 29.1, 29.2 in the fluid line 28.1, 28.2, ... according to control inputs from the control unit 42.

In one implementation the control unit 42 operates in an open-loop manner. A required retaining force which is currently to be surpassed is given, e.g. depending on the current diameter of the increasing bale B.1. The control unit 42 calculates an electric amperage or voltage value which will yield this required retaining force. For doing so the control unit 42 applies a stored relationship between the applied amperage or voltage and the resulting provided retaining force. This relationship can be achieved in advanced by performing several tests, e.g. in a workshop. In these tests different amperage/voltage values are applied and the respective provided retaining force is measured. An empirical relationship is achieved and is stored, e.g. in the form of a computer-accessible table. The control unit 42 has access to this stored relationship. It is also possible to generate an analytical relationship by applying a regression analysis onto a sample wherein the sample comprises several different amperage or voltage values and the resulting retaining force values.

In a further implementation a closed-loop control is achieved. The required retaining force serves as the gain value. This gain value can vary over time to achieve a required bale density varying over the bale's diameter. A value indicative of the actual retaining force, e.g. the hydraulic pressure in the cylinder 14, is frequently measured by a sensor, e.g. by a gauge. The control unit 42 triggers the field generator 27, 38.1, 38.2, 39 in order to amend the strength of the generated field 29.1, 29.2, ... as long as a control error above a given tolerance occurs, i.e. as long as the difference between the required and the measured retaining force is above a given threshold, or if the gain value changes. Increasing the field strength increases the viscosity and therefore the provided retaining force. The measured actual retaining force may oscillate around the required retaining force depending on different control inputs from the control unit 42.

In the embodiment of Fig. 3 a gauge 34 or a further suitable pressure sensor measures the hydraulic pressure in the fluid chamber (rod-side chamber 32). The gauge 34 is connected with a bypass fluid line 25 (to be explained below). The bypass valve 26 for the bypass line 25is closed while the bale B.1, B is created and wrapped in the bale forming chamber. The measured hydraulic pressure serves as a value indicative of the actual provided retaining force.

In the pressing belt application the pivoting angle around which the tensioning arms 12.1, 12.2 are pivoted with respect to the tailgate 23 or to the front housing 59 is measured. In one implementation the tensioning arrangement 12.1, 12.2 pulls at a rope. A pivoting angle sensor 56 measures the distance over which the rope is pulled. In a further implementation a potentiometer measures the current rotational position of the tensioning arrangement 12.1, 12.2. In yet a further implementation a distance sensor mounted on the tailgate 23 or on the front housing measures the distance between itself and a reference element mounted on the tensioning arrangement 12.1, 12.2.

The measured pivoting angle achieved in the closed hydraulic system is a value indicative of the current diameter of the round-cylindrical bale B.1, B increasing in the bale forming chamber. In the pressure roller application the pivoting angle of the lever arm is measured and serves as a value indicative of the bale diameter.

In the pressing belt application and in the pressing roller application the retaining force provided by the retaining device is changed depending on the measured pivoting angle such that a varying bale density is achieved. The control unit 42 processes signals from the pivoting angle sensor 56 and triggers the field generator 27, 38.1, 38.2, 39 to increase (or to decrease) the field strength as soon as the pivoting angle has reached a given threshold. Of course the control unit 42 can trigger the field generator 27, 38.1, 38.2, 39 several times to increase or to decrease the field strength. Several pivoting angle thresholds are given.

The diameter in the bale forming chamber is measured by measuring the pivoting angle. As soon as the bale B.1, B has reached a required diameter, the bale B.1, B in the bale forming chamber is wrapped into a net, a plastic sheet, or into several strands of twine. A required number of layers of wrapping material 35 are placed around the bale B in the bale forming chamber. Afterwards the web 35 of wrapping material is severed. Afterwards the wrapped bale is ejected out of the bale forming chamber. For doing so the tailgate 23 is opened. The tensioned pressing belts 10 shift the wrapped bale B out of the bale forming chamber.

Fig. 1 shows a wrapping device with two supply reels 20.1, 20.2 of wrapping material. A web 35 of wrapping material can be pulled from the reel 20.2. The reel 20.1 (behind a cover) serves as a reserve reel.

The web 35 of wrapping material is pulled from the reel 20.2 by means of two pulling rollers 40.1, 40.2. An idler roller 40.1 is biased against a driven pulling roller 40.2. On its way from the reel 20.2 to these pulling rollers 40.1, 40.2 the web 35 of wrapping material is guided around a web deflecting roller 54. This web deflecting roller 54 is mounted on a pivotal bracket 36. The rotating axis of this web deflecting roller 54 and the pivoting axis of the bracket 36 are perpendicular to the drawing plane of Fig. 1.

The web 35 of wrapping material sags down from these two pulling rollers 40.1, 40.2. After starting the wrapping procedure, the increasing leading portion of the web 35 of wrapping material is conveyed by the two pulling rollers 40.1, 40.2 and reaches the wrapping material feeding roller 19 with several ribs on its circumferential surface. This wrapping material feeding roller 19 rotates, is positioned adjacent to and below the wrapping material inlet, and does not touch a bale B in the bale forming chamber. The wrapping material inlet is between the feeding roller 19 and the pressing belts 10. In the embodiment shown in Fig. 1 the wrapping material feeding roller 19 is rotated anti-clockwise and shifts and guide the web 35 of wrapping material towards the wrapping material inlet. The inserted web 35 is clamped between the rotated bale and the bale forming means (rollers 8.1, 8.2 and later pressing belts 10).

A disk brake is mounted on an axle carrying the active supply reel 20.2, decelerates this axle, and ensures that the web 35 is sufficiently tensioned after it is inserted into the bale forming chamber and is clamped. This disk brake is mechanically connected with the bracket 36. For ensuring a sufficient tension, the reel 20.2 is decelerated by this disk brake (not shown). The rotated bale B and the bale forming means together clamp and pull the web 35 against the force of this decelerating disk brake.

On its way from the reel 20.2 to the pulling rollers the web 35 is guided around the web deflecting roller 54. The web deflecting roller 54 is mounted on the bracket 36. This bracket 36 is mounted in a pivotal manner. The bale B and the bale forming means on the one side and the decelerated reel 20.2 on the other side pull from two sides at the web 35. The pulled web 35 tends to pivot the bracket 36 with the web deflecting roller 54 toward the pulling rollers 40.1, 40.2 (in Fig. 1 to the left). In one implementation a passive biasing member, i.e. a spring, presses and biases the disk brake in a decelerating braking position. Pivoting the bracket 36 releases the disk brake against the force of the biasing member.

The invention can also be used in a web tensioning application for a round baler. This web tensioning application can be combined with the pressing belt application (Fig. 1) and with the pressing roller application.

In the web tensioning application (Fig. 1) the invention is used for ensuring that the web 35 of wrapping material is sufficiently tensioned on its way from the reel 20.2 around the web deflecting roller 54 on the pivotal bracket 36 to the two pulling rollers. A retaining device comprising a field generator 27, 38.1, 38.2, 39 as described above is mechanically connected with the bracket 36 and with the front housing 59. When the two pulling rollers 40.1, 40.2 and later the bale B and the bale forming means pull at the web 35 of wrapping material, the web 35 tends to pivot the web deflecting roller 54 and thereby the entire bracket 36 against the controlled retaining force provided by this retaining device. This retaining member according to the invention can be added to or can replace the passive retaining member for the disk brake. In both implementations the web deflecting member with the bracket 36 and the deflecting roller 54 is pivoted against the retaining force provided by the retaining device.

Wrapping the bale in the bale forming chamber is performed in two consecutive phases. The first phase is triggered as soon as the bale B has reached the required diameter. In the first phase the web 35 of wrapping material is conveyed from the reel 20.2 around the web deflecting roller 54 and through a nip between the two pulling rollers 40.1, 40.2 towards the wrapping material inlet. The field generator 27, 38.1, 38.2, 39 of the retaining device for the bracket 36 generates a magnetic field in the fluid lines 28.1, 28.2,... In this first phase the retaining force applied by the retaining device onto the bracket 36 is smaller than in the consecutive second phase such that in the first phase the pulling rollers 40.1, 40.2 can pivot the bracket 36 sufficiently against the retaining force and the disk brake and can convey the web 35 towards and into the bale forming chamber. It is even possible that no braking force is applied in the first phase.

The second phase begins as soon as the rotating bale B in the bale forming chamber together with the starter rollers 8.1, 8.2 and pressing belts 10 or pressing rollers has securely grasped the inserted web 35. In one implementation a web movement sensor measures the distance over which the web 35 is conveyed. This web movement sensor comprise an idler counting roller rotated by the web 35 or by the reel 20.1 and an evaluating unit counting the number of revolutions of the counting roller. In a further implementation the web movement sensor counts the number of rotations of one pulling roller 40.1, 40.2. The web movement sensor can also measure the duration of the web movement. The second phase begins as soon as a value measured by the web movement sensor has reached a given threshold.

In the beginning of the second phase the retaining force is increased for ensuring a sufficient tension of the inserted web 35. For doing so the field generator 27, 38.1, 38.2, 39 for the pivotal bracket 36 increases the strength of the generated magnetic field 29.2, 29.2, .... In a further implementation the field generator 27, 38.1, 38.2, 39 generates a magnetic field only in the second phase. Thanks to the invention the retaining force can increased very quickly and exactly at the right time.

The second phase terminates if the required numbers of web layers are placed around the bale B in the bale forming chamber. This event is preferably detected by the web movement sensor. The web 35 is severed. Preferably the web tension is further increased for the purpose of severing the web 35. This tension increase is performed by further increasing the field strength at the end of the second phase.

Later the piston 22, 24 in the cylinder 14 of the retaining device is shifted back into its initial position.

For ejecting the wrapped bale B the tailgate 23 is opened by the actuator 58 such that an aperture between the opened tailgate 23 and the front housing 59 occurs. While the tailgate 23 is opened and the bale B is ejected, it is desired to guide the hydraulic fluid 30 rapidly back from the base-side chamber 33 to the rod-side chamber 32. For doing so a bypass line bypasses the piston head 24. The bypass line is positioned outside of the cylinder 14 of the retaining device for the tensioning arrangement 12.1, 12.2. A bypass valve can open or close the bypass fluid line. It suffices that the bypass valve can take only two different values: open and close.

Fig. 3 shows a bypass fluid line 25 which connects the base-side chamber 33 with the rod-side chamber 32. The bypass fluid line 25 bypasses the piston head 24. A bypass valve 26 can open and close the bypass line 25 very quickly.

This bypass valve 26 is closed while the bale B.1, B is created and wrapped in the bale forming chamber. As soon as the bale B is completely wrapped and the step of opening the tailgate 23 is triggered, the bypass valve 26 is opened. An actuator, e.g. a pair of hydraulic cylinders 58, pivots the tailgate 23 against the force of gravity away from the front housing 59 and lifts the lower pivoting axis 15 of the retaining device for the tensioning arrangement 12.1, 12.2. A biasing member, e.g. the vertical springs 16, tends to pull the piston 22, 24 into the cylinder 14. The fluid 30 flows from the base-side chamber 33 through the opened bypass line 25 back into the rod-side chamber 32. Later the bypass valve 26 is closed again. This embodiment enables to open and to close the tailgate 23 very quickly. The retaining device does not provide a retaining force acting against the step of opening or closing the tailgate 23. The control unit 42 triggers the step of opening and closing this bypass valve 26.

The biasing member 16 also applies a standard pivoting force onto the tensioning arrangement 12.1, 12.2 while the tailgate 23 is closed and a bale B is formed in the bale forming chamber. Thereby the pressing belts 10 always apply at least a standard compressing force onto the bale B.1, B even if no further crop material is injected into the bale forming chamber and the expanding force of the bale B.1, B does not increase and the pistons of the retaining device are not moved.

As mentioned above the baler comprises a passive biasing member (left spring 16, corresponding right spring) which is pivotally connected with the tailgate 23 and pivotally connected with the tensioning arrangement 12.1, 12.2, cf. Fig. 1. The tensioning arrangement 12.1, 12.2 is pivotally connected with the front housing 59 in the traversal bearing 21. After the completed bale B is ejected out of the bale forming chamber, this biasing member 16 pivots the opened tailgate 23 back into the closed position. Fluid 30 flows through the opened bypass fluid line 25 back into the rod-side chamber 32.

In a variation of the pressing belt application or the pressing roller application the base-side chamber 33 in the cylinder 14 decreases and the rod-side chamber 32 decreases while a bale B.1, B is created. The expanding force of the crop material pivots the tensioning arrangement 12.1, 12.2. This pivotal movement of the tensioning arrangement presses the piston 22, 24 into the cylinder 14.

In a further variation the cylinder 14 is pivotally connected with the tensioning arrangement 12.1, 12.2 in the upper pivoting axis 13. The piston 22, 24 is pivotally connected with the tailgate 23 in the lower pivoting axis 15. The tensioning arrangement 12.1, 12.2 pulls the cylinder 14 upwards.

As mentioned above a bale B.1, B is formed in the bale forming chamber. This bale forming chamber is surrounded by the pressing belts 10. Fig. 1 shows two situations while the bale is created in the bale forming chamber: a small bale B.1 - this is a situation shortly after the formation of the bale has started - and a bale B which has reached the desired size. The bale B is wrapped into wrapping material 35 while the bale B is still in the bale forming chamber. Afterwards the tailgate 23 is opened. The tensioned pressing belts 10 push the bale B out of the bale forming chamber.

In the case of a stand-alone baler the ejected wrapped round-cylindrical bale B drops onto a pivotal ramp 50. This ramp 50 is arranged angularly below and behind the bale forming chamber. The pivotal ramp 50 can be pivoted around a horizontal pivoting axis which is situated in a front part of the ramp 50 - seen in the travelling direction TD. This pivoting axis 73 is perpendicular to the travelling direction TD and to the drawing plane of Fig. 1. The weight of the bale B on the pivotal ramp 50 pivots the ramp 50 downwards. The retaining device 51 applies a retaining force onto the pivotal ramp 50. This retaining force acts against the downward pivotal movement of the ramp 50. The retaining force therefore decelerates the downward pivoting of the ramp 50 and dampens the step of depositing the wrapped bale B on the ground.

It is possible to use a purely passive retaining device 51, e.g. a spring. In a ramp pivoting application, however, the invention is used for adapting the retaining force applied by the retaining device 51 to the weight or to a further a parameter of the bale B on the ramp 50 or of the baler. One implementation is as follows: The higher the weight or the diameter of the bale B on the ramp 50 is the higher is the retaining force provided by the retaining device 51 and the larger is the provided deceleration. In order to achieve this goal, the retaining device 51 for the ramp 50 comprises a piston-cylinder arrangement with a magneto-rheological fluid 30 and a field generator 27, 38.1, 38.2, 39 as described above and as shown in Fig. 3, Fig. 4, and Fig. 5. It is also possible that the retaining force is decreased or increased while the bale rolls over the ramp 50.

The ramp pivoting application can also be used in a cuboid baler, cf. Fig. 2. A ramp 50 is pivotally mounted at the bottom wall 36 below and behind the outlet 64. A cuboid bale is shifted through the outlet 64 and over the pivotal ramp 50 onto the ground. The retaining device controls the pivoting of this pivotal ramp 50.

In one implementation the retaining force for the ramp 50 can be adapted to different parameters of a bale B. The control unit 42 can process signals from different sensors. In one embodiment a scale 52 is arranged at the bottom of the bale forming chamber. This scale 52 directly measures the weight of the bale B in the bale forming chamber. It is also possible to measure the weight of the bale B by means of a scale positioned in the ramp 50 itself. In a further embodiment the diameter of the bale B is measured by the sensor 56 which measures the pivoting angle of the tensioning arrangement 12.1, 12.2. The retaining force applied by the retaining device 51 is adapted to the measured diameter. For measuring the bale diameter the pivoting angle around which the tensioning arrangement 12.1, 12.2 is pivoted is measured. The higher this pivoting angle is the higher is the diameter of the bale B.1, B in the bale forming chamber. This pivoting angle is used for determining when the bale B is ready and can in addition be used for measuring a value indicative of the actual diameter of the bale.

In one implementation a moisture or density sensor measures the moisture or density of the crop material. Preferably this moisture sensor is situated in the feeding channel above the feeding channel bottom 5. The measured moisture or density and the measured diameter together yield two values together being indicative of the bale weight. The retaining force provided by the retaining device for the ramp 50 depends on the bale diameter and/or the moisture.

In one implementation the event that the wrapped bale B has reached the ramp 50 is automatically detected and triggers the step of controlling, e.g. changing, the applied retaining force.

In one application (tilting unit application) a tilting unit tilts the wrapped and ejected round-cylindrical bale B such that the bale B is deposited on a front face. The tilting unit comprises a chassis, at least one horizontal rod, and a pivotal sloping or vertical rod. The tilting unit is mounted behind the bale forming chamber, preferably with an offset to the middle axis of the baler. The ejected and wrapped bale B rolls over the or every horizontal rod and hits the sloping rod. A retaining device according to the invention provides a retaining force onto the sloping rod being hit by the bale. The retaining force can depend on the bale weight or diameter.

In one embodiment the baler is stopped for wrapping a bale and for dropping the wrapped bale B onto the ground. In a further embodiment the baler drops the bale B while the baler B is moved. The baler may comprise a tachometer which measures the travelling velocity over ground of the baler. In one embodiment of the ramp pivoting application or the tilting unit application the strength of the magnetic field provided by the field generator 27, 38.1, 38.2, 39 is adapted to the measured travelling velocity. The retaining force may be higher or lower if the travelling velocity of the baler is higher.

It is often desirable or inevitable to operate the round baler of Fig. 1 or the cuboid baler of Fig. 2 in a hilly environment. The baler can tilt around a longitudinal tilting axis parallel to the travelling direction TD or can tilt around a traversal tilting axis perpendicular to the travelling direction TD or around both tilting axes.

In one implementation an inclination sensor on board of the baler measures an inclination angle around a tilting axis - or around both tilting axes. Two possible implementations of an inclination sensor are
a pendulum and an evaluating unit for this pendulum on board of the baler and
a sensor, e.g. a GPS receiver, for determining the current geo-position of the baler together with a three-dimensional electronic map showing the topography of the field on which the baler is operated.

The retaining device controls the pivoting of the ramp 50 or the sloping rod of the tilting unit depending on a value from the inclination sensor. The control unit 42 generates control inputs for the field generator 27, 28.1, 28.2, 29 depending on values measured by the inclination sensor.

In a downholder damping application the invention is used for damping the pivotal movement of the downholder unit comprising the downholder frame 55 carrying the idler roller 11, cf. Fig. 1. As mentioned above, the picked-up crop material is conveyed below the downholder unit 11, 55 towards the feeding channel and tends to pivot the downholder unit 11, 55 upwards against the force of gravity of the pivotal downholder unit 11, 55. A retaining device according to the invention dampens the upward and/or downward movement of the downholder unit 11, 55.

In one implementation the retaining force of the retaining device dampens an upward movement of the downholder frame 55 carrying the idler roller 11. In this implementation the retaining force is directed parallel to the force of gravity or angular to the force of gravity. In a further implementation the retaining force dampens a downward movement of the downholder unit 11, 55. The retaining force is directed opposite to the force of gravity.

A piston-cylinder device (not shown in Fig. 1) with a magneto-rheological fluid 30 is connected with the baler's frame or with the pick-up frame 1 on the one side and with the downholder frame 55 on the other side. The crop material pivots the downholder unit 11, 55 upwards against the retaining force of this retaining device. In one implementation the retaining device is controlled depending on the current rotating angle which is measured by the pivoting angle sensor 53. The higher this rotating angle is the higher is the retaining force which is applied by the retaining device. The baler's control unit 42 receives signals from the pivoting angle sensor 53 and transmits control inputs to the retaining device. In a further embodiment the oscillation of the pivotal downholder unit 11, 55 is measured by processing the sequence of measured pivoting angles. The retaining force is increased if a high oscillation, i.e. a high frequency of the oscillating downholder unit 11, 55, is measured. It is decreased if a low oscillation is detected.

In a tailgate damping application the retaining device is used for damping the pivotal movement of the tailgate 23 shortly before the tailgate 23 reaches one of its final positions (fully opened or fully closed). The applied retaining force avoids a jerk which would otherwise rapidly decelerate the movement of the tailgate 23. The tailgate 23 is pivoted by an actuator, e.g. by a left tailgate piston-cylinder device 58 (Fig. 1) and a corresponding right tailgate piston-cylinder device (not shown). The retaining device is connected with the tailgate 23 or with a moving element of the tailgate actuator 58, e.g. with a piston of a tailgate piston-cylinder device.

Thanks to the invention it is possible to switch on or to switch off very quickly this damping mechanism for the tailgate 23. It is also possible to change the retaining force applied by the retaining device onto the tailgate 23. In one embodiment the retaining force depends on the measured size of the bale B in the bale forming chamber. In case of a large bale the tailgate 23 is quickly moved into the fully opened position. The bale can only be ejected after the tailgate 23 has nearly reached its fully opened position. In order to quickly achieve a sufficient aperture for the large bale B, only a small retaining force is applied. In case of a smaller bale the bale can be ejected before the tailgate 23 has reached its fully opened position. A higher retaining force yields a higher damping effect and reduces the mechanical stress for the tailgate 23.

In a further implementation an inclination sensor on board of the baler measures the current inclination of the baler, i.e. the tilting angle of the baler around a horizontal axis being parallel to the travelling direction TD or perpendicular to it. The control unit 42 processes signals from the inclination sensor and generates control inputs for the retaining device which controls the pivoting of the pivotal ramp 50 or of the tilting unit rod or of the tailgate 23 or the downholder unit 11, 55 depending on the current inclination of the baler. The provided retaining force depends on the measured inclination. In one implementation the retaining force is slower in case of a high inclination of the baler.

The tailgate damping application can be combined with the other applications for a round baler (Fig. 1) which are described above. The downholder damping application and the ramp pivoting application can be used in a round baler as well as in a cuboid baler as shown in Fig. 2.

In the pivotal sidewall application the invention is used for controlling the pivoting of a pivotal sidewall part. In the example of Fig. 2 the top wall part 77.2 can pivot around the traversal axle 67. It is also possible that the two opposing sidewalls comprise two pivotal rear wall parts.

The expanding force of the string of crop material applies an expanding force onto the walls of the pressing channel 65. This expanding force tends to pivot the
pivotal wall part 77.2 and in one implementation at least one further pivotal wall part such that the cross-section area of the pressing channel 65 increases.

The retaining device 68 is arranged between the traversal bearing 72 and the pivotal top wall part 77.2, cf. Fig. 2. In one implementation the retaining device 68 for the wall part 77.2 operates in a purely passive manner. Its own weight pivots the wall part 77.2 downwards. The expanding force of the crop material string pivots the wall part 77.2 upwards against the retaining force of the retaining device 68.

In a further embodiment an actuator (not shown) can actively pivot the wall part 77.2 downwardly against the expanding force of the crop material. In one implementation a hydraulic motor serves as the actuator. This hydraulic motor can comprise a double-acting hydraulic cylinder.

In one implementation either the actuator is activated and the retaining device 68 is deactivated. Or the retaining device 68 is activated and the actuator is deactivated. The activated actuator decreases the cross-section area by pivoting the wall part 77.2 inwardly such that the cross section area is reduced. The actuator operates against the expanding force of the crop material in the rear segment of the bale forming chamber 65. The activated retaining device 68 enables the crop material to pivot the wall part 77.2 outwardly against the provided retaining force such that the cross-section area is increasing and the pressure is decreased. The wall part 77.2 is pivoted outwardly against the retaining force of the retaining device 68. The control unit 75 controls the actuator as well as the retaining device 68.

The term "comprises" does not exclude other elements or steps. The articles "a", "an", and "one" do not exclude a plurality of elements.

**LIST OF REFERENCE SIGNS**

| | |
|---|---|
| 1 | frame of the pick-up unit |
| 2.1, 2.2, ... | spring-mounted tines of the pick-up unit |
| 3.1, 3.2, 3.3 | moveable guiding rollers, mounted between the inner tensioning arms 12.1 |
| 4 | conveying rotor with rigid tines, engage from above into the feeding channel |
| 5 | bottom of the feeding channel |
| 6.1, 6.2, 6.3, ... | stationary guiding rollers for the pressing belts 10, mounted at the tailgate 23 |
| 7 | towing unit |
| 8.1, 8.2 | starter rollers, form the two borders of the crop material inlet |
| 9.1, 9.2, ... | stationary guiding rollers for the pressing belts 10, mounted at the front housing 59 |
| 10 | pressing belt |
| 11 | downholder roller on the free end of the downholder frame 55 |
| 12.1 | inner tensioning member with two inner tensioning arms, carries the moveable guiding rollers 3.1, 3.2, 3.3 |
| 12.2 | outer tensioning member with two outer tensioning arms, carries the tailgate 23 |
| 13 | axle for the pivotal connection between the piston rod 22 and the outer tensioning member 12.2 or the pivotal sidewall part 77.2 |
| 14 | cylindrical tube of the piston-cylinder arrangement in which the piston 22, 24 moves |
| 15 | axle for the pivotal connection between the cylinder 14 and the tailgate 23 or the traversal bearing 72 |
| 16 | biasing member in the form of a spring, pivotally connected with the outer tensioning member 12.2, pivots the tensioning arrangement 12.1, 12.2 downwards |
| 17 | left cover plate |
| 18 | knives, engage from below into the feeding channel |
| 19 | feed roller for the wrapping material |
| 20.1 | reserve supply reel with wrapping material |
| 20.2 | supply reel with wrapping material being in the unrolling station |
| 21 | traversal bearing for the pivotal connection between the tensioning arrangement 12.1, 12.2 and the front housing 59 |
| 22 | piston rod of the piston-cylinder arrangement |
| 23 | pivotal tailgate, pivotally connected with the front housing 59 |
| 24 | piston head of the piston-cylinder arrangement, comprises several bores serving as fluid lines 28.1, 28.2, ... |
| 25 | bypass fluid line, bypasses the cylinder 14 |
| 26 | bypass valve for the bypass fluid line 25 |
| 27 | magnetic flux source of the field generator; magnetic source in the form of an electromagnetic coil |
| 28.1, 28.2 | parallel fluid lines guided through the piston head 24 |
| 29.1, 29.2, ... | lines of magnetic flux, generated by the field generator 27 |
| 30 | hydraulic fluid of the retaining device |
| 31.1, 31.2 | magnetizable parts in the fluid 30 |
| 32 | rod-side fluid chamber in the cylinder 14, decreases its volume while a bale B.1, B is formed |
| 33 | base-side chamber in the cylinder 14, increases its volume while a bale B.1, B is formed |
| 34 | gauge in the bypass fluid line 25, measures the pressure in the rod-end chamber 32 |
| 35 | web of wrapping material, pulled from the supply reel 20.2 and guided around the web deflecting roller 54 |
| 36 | bracket carrying the web deflecting roller 54 around which the web 35 of wrapping material is guided |
| 38.1, 38.2 | electric lines to the magnetic flux source 27 |
| 39 | controllable electric source for the magnetic flux source 27 |
| 40.1, 40.2 | pulling rollers for the web 35 |
| 42 | control unit, controls the electric source 39 |
| 49 | left wheel |
| 50 | pivotal ramp |
| 51 | passive retaining member for the pivotal ramp 50 |
| 52 | scale for measuring the weight of the bale B in the bale forming chamber |
| 53 | pivoting angle sensor, measures the pivoting angle of the pivotal downholder unit with the frame 55 carrying the roller 11 |
| 54 | web deflecting roller for the web 35, belonging to the bracket 36 |
| 55 | pivotal downholder frame, carries the downholder roller 11 |
| 56 | pivoting angle sensor, measures the pivoting angle of the tensioning arrangement 12.1, 12.2 |
| 57 | left guiding wheel for the pick-up unit |
| 58 | left hydraulic cylinder for opening and closing the tailgate 23 |
| 59 | front housing |
| 60 | pressing piston rod moving the pressing piston head 62 |
| 61 | pressing surface of the pressing piston head 62 |
| 62 | pressing piston head, presses loose crop material LM in the pressing direction PR |
| 63 | bottom wall of the pressing channel 65 |
| 64 | rectangular outlet of the pressing channel 65 |
| 65 | pressing channel of the cuboid baler |
| 67 | traversal pivoting axle for the rear segment 77.2 of the top wall of the pressing channel 65 |
| 68 | retaining device for the pivotal rear segment 77.2 of the top wall |
| 69 | inlet of the pressing channel 65 |
| 71 | stuffing tines, engage into the pre-pressing channel 74 |
| 72 | traversal bearing, carries the pivotal top wall part 77.2 |
| 73 | pivoting axis of the pivotal ramp 50 |
| 74 | pre-pressing channel, leads to the pressing channel 65 |
| 75 | control unit for the retaining device 68 |
| 77.1 | fixed front segment of the top wall of the pressing channel 65 |
| 77.2 | pivotal rear segment of the top wall of the pressing channel 65 |
| B | completed bale in the bale forming chamber |
| B.1 | bale with an intermediate diameter already created during the bale forming phase |
| FPD | fluid pressing direction |
| LM | loose crop material to be pressed in the pressing channel 65 |
| PR | pressing direction of the pressing piston 60, 62 |
| TD | travelling direction of the baler |

## Claims

1. Bale forming apparatus for forming a bale (B) from loose material, wherein the bale forming apparatus comprises
a pivotal bale forming member (12.1, 12.2, 36, 50, 54, 77.2) and
a retaining device arranged to control the pivoting of the pivotal bale forming member (12.1, 12.2, 36, 50, 54, 77.2), and
wherein the retaining device comprises
a hydraulic system (14, 22, 24, 28.1, 28.2) arranged to contain a hydraulic fluid (30) and
a flow restricting device arranged to restrict a flow of a hydraulic fluid (30) in the hydraulic system (14, 22, 24, 28.1, 28.2),
**characterized in that**
the flow restricting device comprises a field generator (27, 38.1, 38.2, 39),
wherein the field generator (27, 38.1, 38.2, 39) is arranged to generate a magnetic field (29.1, 29.2, ...) in a part (28.1, 28.2) of the hydraulic system (14, 22, 24, 28.1, 28.2).

2. Bale forming apparatus according to claim 1,
**characterized in that**
that part of the hydraulic system (14, 22, 24, 28.1, 28.2) which is exposed to the magnetic field (29.1, 29.2, ...)
is at least partially filled with a magneto-rheological fluid (30).

3. Bale forming apparatus according to claim 2,
**characterized in that**
the magneto-rheological fluid (30) comprises several magnetizable particles (31.1, 31.2, ...).

4. Bale forming apparatus according to one of the preceding claims,
**characterized in that**
the field generator (27, 38.1, 38.2, 39) comprises an electric coil or spool (27) through which an electric current can flow.

5. Bale forming apparatus according to one of the preceding claims,
**characterized in that**
the field generator (27, 38.1, 38.2, 39) comprises
- a permanent magnet and
- an actuator for moving the permanent magnet or a magnetic shield with respect to the hydraulic system.

6. Bale forming apparatus according to one of the preceding claims,
**characterized in that**
the field generator (27, 38.1, 38.2, 39) is entirely or at least partially positioned in the interior of the hydraulic system (14, 22, 24, 28.1, 28.2).

7. Bale forming apparatus according to one of the preceding claims,
**characterized in that**
the bale forming apparatus comprises a control unit (42) for the flow restricting device, wherein the field generator (27, 38.1, 38.2, 39) is arranged to generate a magnetic field (29.1, 29.2, ...)
depending on a control input received from the control unit (42).

8. Bale forming apparatus according to claim 7,
**characterized in that**
the bale forming apparatus comprises
a further pivotal bale forming member and
a further retaining device arranged to control the pivoting of the further pivotal bale forming member,
wherein the further retaining device comprises
a further hydraulic system and
a further field generator, and
wherein the further field generator is arranged to generate a magnetic field (29.1, 29.2, ...)
depending on a further control input received from the same control unit (42).

9. Bale forming apparatus according to claim 7 or claim 8,
**characterized in that**
the bale forming apparatus comprises a bale parameter sensor (52) arranged to measure a value indicative of a parameter of a bale (B) formed by the bale forming apparatus or of loose material
wherein the control unit (42) is arranged to generate a control input for the field generator (27, 38.1, 38.2, 39)
depending on at least one value measured by the bale parameter sensor (52).

10. Bale forming apparatus according to one of the preceding claims, **characterized in that**
the bale forming apparatus comprises a bale pressing means (10),
wherein the bale pressing means (10) surrounds at least partially a drum-shaped bale forming chamber,
wherein the bale forming apparatus is arranged to form a bale (B.1, B) in the bale forming chamber, and
wherein the pivotal bale forming member (12.1, 12.2, 36, 50, 54, 77.2) is mechanically connected with the bale pressing means (10).

11. Vehicle comprising
a bale forming apparatus according to one of the proceeding claims .

12. Vehicle according to claim 11,
wherein the vehicle further comprises an inclination sensor arranged to measure an inclination of the vehicle, wherein the field generator (27, 28.1, 28.2, 29) is arranged to generate a magnetic field (29.1, 29.2, ...)
depending on a value from the inclination sensor.

13. Bale forming method for forming a bale (B) from loose material,
wherein the bale (B) is formed by a bale forming apparatus comprising
a pivotal bale forming member (12.1, 12.2, 36, 50, 54, 77.2) and
a retaining device,
wherein the retaining device comprises
a hydraulic system (14, 22, 24, 28.1, 28.2) at least partially being filled with a hydraulic fluid (30) and
a flow restricting device, and
wherein the method comprises the steps that
the pivotal bale forming member (12.1, 12.2, 36, 50, 54, 77.2) is pivoted while the bale forming apparatus forms the bale (B) and
the retaining device controls the pivoting of the pivotal bale forming member (12.1, 12.2, 36, 50, 54, 77.2), and
wherein the step that the retaining device controls the pivoting of the pivotal bale forming member (12.1, 12.2, 36, 50, 54, 77.2)
comprises the step that the flow restricting device restricts the flow of the fluid (30) in the hydraulic system (14, 22, 24, 28.1, 28.2),
**characterized in that**
the fluid (30) in the hydraulic system (14, 22, 24, 28.1, 28.2) is a magneto-rheological fluid,
the retaining device comprises a field generator (27, 38.1, 38.2, 39), and
the step that the flow restricting device restricts the fluid flow comprises the step that the field generator (27, 38.1, 38.2, 39) generates at least temporarily a magnetic field (29.1, 29.2, ...) in a part (28.1, 28.2, ...) of the hydraulic system (14, 22, 24, 28.1, 28.2).

14. Bale forming method according to claim 13,
**characterized in that**
the step that the flow restricting device restricts the fluid flow
comprises the steps that the field generator (27, 38.1, 38.2, 39)
first generates a magnetic field (29.1, 29.2, ...) in the hydraulic system part (28.1, 28.2, ...) with a first field strength and
afterwards generates a magnetic field (29.1, 29.2, ...) in the hydraulic system part (28.1, 28.2, ...) with a second field strength being different from the first field strength.

## Patentansprüche

1. Ballenbildungsvorrichtung zur Bildung eines Ballens (B) aus losem Material, wobei die Ballenbildungsvorrichtung aufweist
ein verschwenkbares ballenbildendes Element (12.1, 12.2, 36, 50, 54, 77.2) und
ein stützendes, sicherndes oder haltendes Gerät zur Steuerung oder Regelung des Verschwenkens des verschwenkbaren ballenbildenden Elements (12.1, 12.2, 35, 50, 54, 77.2), wobei das stützende, sichernde oder haltende Gerät aufweist:
ein Hydrauliksystem (14, 22, 24, 28.1, 28.2), welches eingerichtet ist zur Beinhaltung eines hydraulischen Fluids (30), und
ein den Fluss beschränkenden Gerät, welches zur Beschränkung eines Flusses eines hydraulischen Fluids (30) in dem hydraulischen System (14, 22, 24, 28.1, 28.2) eingerichtet ist
**dadurch gekennzeichnet, dass**
das den Fluss beschränkende Gerät einen Feldgenerator (27, 38.1, 38.2, 39) aufweist,
wobei der Feldgenerator (27, 38.1, 38.2, 39) eingerichtet ist zur Erzeugung eines magnetischen Feldes (29.1, 29.2, ...) in einem Teil (28.1, 28.2) des Hydrauliksystems (14, 22, 24, 28.1, 28.2).

2. Ballenbildungsvorrichtung nach Anspruch 1, **dadurch gekennzeichnet, dass** der Teil des Hydrauliksystems (14, 22, 24, 28.1, 28.2), der dem magnetischen Feld (29.1, 29.2, ...) ausgesetzt ist, zumindest teilweise mit einem magneto-rheologischen Fluid (30) gefüllt ist.

3. Ballenbildungsvorrichtung nach Anspruch 2, **dadurch gekennzeichnet, dass** das magneto-rheologische Fluid (30) mehrere magnetisierbare Partikel (31.1, 31.2, ...) aufweist.

4. Ballenbildungsvorrichtung nach einem der vorhergehenden Ansprüche, **dadurch gekennzeichnet, dass** der Feldgenerator (27, 38.1, 38.2, 39) eine elektrische Windung oder Spule (27) aufweist, durch die ein elektrischer Strom fließen kann.

5. Ballenbildungsvorrichtung nach einem der vorhergehenden Ansprüche, **dadurch gekennzeichnet, dass** der Feldgenerator (27, 38.1, 38.2, 39) aufweist
- einen Permanentmagneten und
- einen Aktuator zum Bewegen des Permanentmagneten oder einer magnetischen Abschirmung gegenüber dem Hydrauliksystem.

6. Ballenbildungsvorrichtung nach einem der vorhergehenden Ansprüche, **dadurch gekennzeichnet, dass** der Feldgenerator (27, 38.1, 38.2, 39) vollständig oder zumindest teilweise in dem Inneren des Hydrauliksystems (14, 22, 24, 28.1, 28.2) angeordnet ist.

7. Ballenbildungsvorrichtung nach einem der vorhergehenden Ansprüche, **dadurch gekennzeichnet, dass** die Ballenbildungsvorrichtung eine Steuereinheit (42) für das den Fluss beschränkende Gerät aufweist, wobei der Feldgenerator (27, 38.1, 38.2, 39) eingerichtet ist zur Erzeugung eines magnetischen Feldes (29.1, 29.2, ...) in Abhängigkeit von einer steuernden oder regelnden Eingangsgröße, die von der Steuereinheit (42) empfangen wird.

8. Ballenbildungsvorrichtung nach Anspruch 7, **dadurch gekennzeichnet, dass** die Ballenbildungsvorrichtung aufweist
ein weiteres verschwenkbares ballenbildendes Element und
ein weiteres stützendes, sicherndes oder haltendes Gerät, welches eingerichtet ist zur Steuerung oder Regelung der Verschwenkung des weiteren verschwenkbaren ballenbildenden Elements,
wobei das weitere stützende, sichernde oder haltende Gerät aufweist
ein weiteres Hydrauliksystem und
einen weiteren Feldgenerator, und
wobei der weitere Feldgenerator eingerichtet ist zur Erzeugung eines magnetischen Feldes (29.1, 29.2, ...) in Abhängigkeit von einer weiteren steuernden oder regelnden Eingangsgröße, die von der selben Steuereinheit (42) empfangen wird.

9. Ballenbildungsvorrichtung nach Anspruch 7 oder 8, **dadurch gekennzeichnet, dass** die Ballenbildungsvorrichtung einen Sensor (52) für einen Ballen-Parameter aufweist, der eingerichtet ist zur Messung eines Werts, der einen Parameter eines Ballens (B), der mit der Ballenbildungsvorrichtung gebildet wird, oder von losem Material indiziert, wobei die Steuereinheit (42) eingerichtet ist zur Erzeugung einer steuernden oder regelnden Eingangsgröße für den Feldgenerator (27, 38.1, 38.2, 39) in Abhängigkeit von zumindest einem Wert, der von dem Sensor (52) für einen Ballen-Parameter gemessen worden ist.

10. Ballenbildungsvorrichtung nach einem der vorhergehenden Ansprüche, **dadurch gekennzeichnet, dass** die Ballenbildungsvorrichtung ein ballenpressendes Mittel (10) aufweist, wobei das ballenpressende Mittel (10) zumindest teilweise eine trommelförmige ballenbildende Kammer umgibt,
wobei die Ballenbildungsvorrichtung eingerichtet ist zur Bildung eines Ballens (B.1, B) in der ballenbildenden Kammer und
wobei das verschwenkbare ballenbildende Element (12.1, 12.2, 36, 50, 54, 77.2) mechanisch mit dem ballenpressenden Mittel (10) verbunden ist.

11. Fahrzeug mit einer Ballenbildungsvorrichtung nach einem der vorhergehenden Ansprüche.

12. Fahrzeug nach Anspruch 11, wobei das Fahrzeug darüber hinaus einen Neigungssensor aufweist, der eingerichtet ist zur Messung einer Neigung des Fahrzeugs,
wobei der Feldgenerator (27, 28.1, 28.2, 29) eingerichtet ist zur Erzeugung eines magnetischen Feldes (29.1, 29.2, ...) in Abhängigkeit von einem Wert des Neigungssensors.

13. Verfahren zur Bildung eines Ballens (B) aus losem Material, wobei der Ballen (B) gebildet wird durch eine Ballenbildungsvorrichtung mit
einem verschwenkbaren ballenbildenden Element (12.1, 12.2, 36, 50, 54, 77.2) und einem sichernden, stützenden oder haltenden Gerät,
wobei das sichernde, stützende oder haltende Gerät aufweist
ein Hydrauliksystem (14, 22, 24, 28.1, 28.2), welches zumindest teilweise mit einem Hydraulikfluid (30) gefüllt ist und
einem Gerät zur Beschränkung des Flusses und
wobei das Verfahren die Verfahrensschritte aufweist, dass
das verschwenkbare ballenbildende Element (12.1, 12.2, 36, 50, 54, 77.2) verschwenkt wird während die Ballenbildungsvorrichtung den Ballen (B) bildet und
das sichernde, stützende oder haltende Gerät die Verschwenkung des verschwenkbaren ballenbildenden Elements (12.1, 12.2, 36, 50, 54, 77.2) steuert oder regelt und
wobei der Verfahrensschritt, dass das sichernde, stützende oder haltende Gerät das Verschwenken des verschwenkbaren ballenbildenden Elements (12.1, 12.2, 36, 50, 54, 77.2) steuert oder regelt, den Verfahrensschritt aufweist, dass das den Fluss beschränkende Gerät den Fluss des Fluids (30) in dem Hydrauliksystem (14, 22, 24, 28.1, 28.2) beschränkt,
**dadurch gekennzeichnet, dass**
das Fluid (30) in dem Hydrauliksystem (14, 22, 24, 28.1, 28.2) ein magneto-rheologisches Fluid ist,
das sichernde, stützende oder haltende Gerät einen Feldgenerator (27, 38.1, 38.2, 39) aufweist und
der Verfahrensschritt, dass das den Fluss beschränkende Gerät den fluidischen Fluss beschränkt, den Verfahrensschritt aufweist, dass der Feldgenerator (27, 38.1, 38.2, 39) zumindest temporär ein Magnetfeld (29.1, 29.2, ...) in einem Teil (28.1, 28.2, ...) des Hydrauliksystems (14, 22, 24, 28.1, 28.2) erzeugt.

14. Verfahren nach Anspruch 13, **dadurch gekennzeichnet, dass** der Verfahrensschritt, dass das den Fluss beschränkende Gerät den fluidischen Fluss beschränkt die Verfahrensschritte aufweist, dass der Feldgenerator (27, 38.1, 38.2, 39)
zunächst ein Magnetfeld (29.1, 29.2, ...) in dem Teil des Hydrauliksystems (28.1, 28.2, ...) mit einer ersten Feldstärke erzeugt und
anschließend ein Magnetfeld (29.1, 29.2, ...) in dem Teil des Hydrauliksystems (28.1, 28.2, ...) mit einer zweiten Feldstärke erzeugt, die von der ersten Feldstärke abweicht.

## Revendications

1. Appareil de formation de balle pour former une balle (B) à partir de matériau en vrac, dans lequel l'appareil de formation de balle comprend
un organe pivotant de formation de balle (12.1, 12.2, 36, 50, 54, 77.2) et
un dispositif de retenue agencé pour commander le pivotement de l'organe pivotant de formation de balle (12.1, 12.2, 36, 50, 54, 77.2), et
dans lequel le dispositif de retenue comprend
un système hydraulique (14, 22, 24, 28.1, 28.2) agencé pour contenir un fluide hydraulique (30) et
un dispositif de restriction d'écoulement agencé pour restreindre un écoulement d'un fluide hydraulique (30) dans le système hydraulique (14, 22, 24, 28.1, 28.2),
**caractérisé en ce que**
le dispositif de restriction d'écoulement comprend un générateur de champ (27, 38.1, 38.2, 39),
dans lequel le générateur de champ (27, 38.1, 38.2, 39) est agencé pour générer un champ magnétique (29.1, 29.2, ...) dans une partie (28.1, 28.2) du système hydraulique (14, 22, 24, 28.1, 28.2).

2. Appareil de formation de balle selon la revendication 1,
**caractérisé en ce que**
cette partie du système hydraulique (14, 22, 24, 28.1, 28.2) qui est exposée au champ magnétique (29.1, 29.2, ...)
est remplie au moins partiellement d'un fluide magnétorhéologique (30).

3. Appareil de formation de balle selon la revendication 2,
**caractérisé en ce que**
le fluide magnétorhéologique (30) comprend plusieurs particules aimantables (31.1, 31.2, ...).

4. Appareil de formation de balle selon l'une des revendications précédentes,
**caractérisé en ce que**
le générateur de champ (27, 38.1, 38.2, 39) comprend une bobine ou un corps électrique (27) à travers lequel un courant électrique peut circuler.

5. Appareil de formation de balle selon l'une des revendications précédentes,
**caractérisé en ce que**
le générateur de champ (27, 38.1, 38.2, 39) comprend
- un aimant permanent et
- un actionneur pour déplacer l'aimant permanent ou un blindage magnétique par rapport au système hydraulique.

6. Appareil de formation de balle selon l'une des revendications précédentes,
**caractérisé en ce que**
le générateur de champ (27, 38.1, 38.2, 39) est positionné totalement ou au moins partiellement dans l'intérieur du système hydraulique (14, 22, 24, 28.1, 28.2) .

7. Appareil de formation de balle selon l'une des revendications précédentes,
**caractérisé en ce que**
l'appareil de formation de balle comprend une unité de commande (42) pour le dispositif de restriction d'écoulement, dans lequel le générateur de champ (27, 38.1, 38.2, 39) est agencé pour générer un champ magnétique (29.1, 29.2, ...)
selon une entrée de commande reçue en provenance de l'unité de commande (42).

8. Appareil de formation de balle selon la revendication 7,
**caractérisé en ce que**
l'appareil de formation de balle comprend
un organe pivotant de formation de balle supplémentaire et
un dispositif de retenue supplémentaire agencé pour commander le pivotement de l'organe pivotant de formation de balle supplémentaire,
dans lequel le dispositif de retenue supplémentaire comprend
un système hydraulique supplémentaire et
un générateur de champ supplémentaire, et
dans lequel le générateur de champ supplémentaire est agencé pour générer un champ magnétique (29.1, 29.2, ...)
selon une entrée de commande supplémentaire reçue en provenance de la même unité de commande (42).

9. Appareil de formation de balle selon la revendication 7 ou la revendication 8,
**caractérisé en ce que**
l'appareil de formation de balle comprend un capteur de paramètre de balle (52) agencé pour mesurer une valeur indicative d'un paramètre d'une balle (B) formée par l'appareil de formation de balle ou de matériau en vrac
dans lequel l'unité de commande (42) est agencée pour générer une entrée de commande pour le générateur de champ (27, 38.1, 38.2, 39)
selon au moins une valeur mesurée par le capteur de paramètre de balle (52).

10. Appareil de formation de balle selon l'une des revendications précédentes,
**caractérisé en ce que**
l'appareil de formation de balle comprend un moyen de presse de balle (10),
dans lequel le moyen de presse de balle (10) entoure au moins partiellement une chambre de formation de balle en forme de tambour,
dans lequel l'appareil de formation de balle est agencé pour former une balle (B.1, B) dans la chambre de formation de balle, et
dans lequel l'organe pivotant de formation de balle (12.1, 12.2, 36, 50, 54, 77.2) est raccordé mécaniquement au moyen de presse de balle (10).

11. Véhicule comprenant
un appareil de formation de balle selon l'une des revendications précédentes.

12. Véhicule selon la revendication 11,
dans lequel le véhicule comprend en outre un capteur d'inclinaison agencé pour mesurer une inclinaison du véhicule,
dans lequel le générateur de champ (27, 28.1, 28.2, 29) est agencé pour générer un champ magnétique (29.1, 29.2, ...)
selon une valeur provenant du capteur d'inclinaison.

13. Procédé de formation de balle pour former une balle (B) à partir de matériau en vrac,
dans lequel la balle (B) est formée par un appareil de formation de balle comprenant
un organe pivotant de formation de balle (12.1, 12.2, 36, 50, 54, 77.2) et
un dispositif de retenue,
dans lequel le dispositif de retenue comprend
un système hydraulique (14, 22, 24, 28.1, 28.2) rempli au moins partiellement d'un fluide hydraulique (30) et
un dispositif de restriction d'écoulement, et
dans lequel le procédé comprend les étapes selon lesquelles
l'organe pivotant de formation de balle (12.1, 12.2, 36, 50, 54, 77.2) pivote tandis que l'appareil de formation de balle forme la balle (B) et
le dispositif de retenue commande le pivotement de l'organe pivotant de formation de balle (12.1, 12.2, 36, 50, 54, 77.2), et
dans lequel l'étape selon laquelle le dispositif de retenue commande le pivotement de l'organe pivotant de formation de balle (12.1, 12.2, 36, 50, 54, 77.2)
comprend l'étape selon laquelle le dispositif de restriction d'écoulement restreint l'écoulement du fluide (30) dans le système hydraulique (14, 22, 24, 28.1, 28.2),
**caractérisé en ce que**
le fluide (30) dans le système hydraulique (14, 22, 24, 28.1, 28.2) est un fluide magnétorhéologique,
le dispositif de retenue comprend un générateur de champ (27, 38.1, 38.2, 39), et
l'étape selon laquelle le dispositif de restriction d'écoulement restreint l'écoulement de fluide comprend l'étape selon laquelle le générateur de champ (27, 38.1, 38.2, 39) génère au moins temporairement un champ magnétique (29.1, 29.2, ...) dans une partie (28.1, 28.2, ...) du système hydraulique (14, 22, 24, 28.1, 28.2).

14. Procédé de formation de balle selon la revendication 13,
**caractérisé en ce que**
l'étape selon laquelle le dispositif de restriction d'écoulement restreint l'écoulement de fluide comprend les étapes selon lesquelles le générateur de champ (27, 38.1, 38.2, 39)
génère d'abord un champ magnétique (29.1, 29.2, ...) dans la partie de système hydraulique (28.1, 28.2, ...) avec une première intensité de champ et
génère ensuite un champ magnétique (29.1, 29.2, ...) dans la partie de système hydraulique (28.1, 28.2, ...) avec une seconde intensité de champ différente de la première intensité de champ.
